(19) Europäisches Patentamt
European Patent Office
Office européen des brevets

(11) EP 4 644 447 A1

(12) **EUROPEAN PATENT APPLICATION**
published in accordance with Art. 153(4) EPC

(43) Date of publication:
**05.11.2025 Bulletin 2025/45**

(21) Application number: **23911819.3**

(22) Date of filing: **18.12.2023**

(51) International Patent Classification (IPC):
***C08G 18/10*** *(2006.01)* ***C08G 18/00*** *(2006.01)*

(52) Cooperative Patent Classification (CPC):
**C08G 18/00; C08G 18/10**

(86) International application number:
**PCT/JP2023/045270**

(87) International publication number:
**WO 2024/143038 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 JP 2022210276**

(71) Applicant: **Asahi Kasei Kabushiki Kaisha**
**Tokyo 1000006 (JP)**

(72) Inventors:
- **HIROSE, Youichi**
  **Tokyo 100-0006 (JP)**
- **KAWAI, Yasufumi**
  **Tokyo 100-0006 (JP)**

(74) Representative: **Strehl & Partner mbB**
**Maximilianstrasse 54**
**80538 München (DE)**

(54) **POLYOL-CONTAINING COMPOSITION, AND POLYURETHANE AND WATER-BASED POLYURETHANE MADE THEREFROM**

(57) The present invention provides a novel polyol-containing composition and the like capable of forming polyurethane or aqueous polyurethane that is not only excellent in durability but has various functionalities enhanced with the introduction of a functional group. The present invention provides a polyol-containing composition comprising at least one hydroxy compound, wherein the polyol-containing composition has a number-average molecular weight of 300 to 5,000, and the at least one hydroxy compound has: at least one main backbone structure selected from the group consisting of an isocyanurate backbone, an iminooxadiazinedione backbone, a biuret backbone, an allophanate backbone, an aromatic backbone, and an alicyclic backbone; at least one sub-backbone structure selected from the group consisting of a carbonate bond, an ether bond, and an ester bond, and connected directly or via a linking group to the main backbone structure; at least two or more terminal hydroxy groups connected directly or via a linking group to the sub-backbone structure; and at least one functional group other than a hydroxy group connected directly or via a linking group to the main backbone structure.



Processed by Luminess, 75001 PARIS (FR)

## Description

### Technical Field

The present invention relates to a polyol-containing composition, and polyurethane and aqueous polyurethane obtained using the same as a starting material, and the like.

### Background Art

Polyurethane resins are used in a wide range of areas such as synthetic leather, artificial leather, adhesives, paints for furniture, and paints for automobiles. The polyurethane resins are usually obtained as addition polymers of isocyanates and polyol components. The polyurethane resins are required to have various properties of durability such as heat resistance, water resistance, weather resistance, hydrolysis resistance, solvent resistance, sunscreen resistance, scratch resistance, and the like. Hence, use of polyol components having a backbone structure of, for example, polyether, polyester, or polycarbonate has been studied on the polyol components to be reacted with isocyanates among starting materials for the polyurethane resins.

In recent years, the development of polyurethane having an enhanced function, for example, water dispersibility, antifouling property, or abrasion resistance has been studied on highly functional polyurethane resins. Specifically, Patent Literature 1 discloses a urethane resin (A) having an anionic group (a1) and a polyethylene oxide chain (a2) as a side chain, the urethane resin being obtained by reacting anionic group-containing polyol (b1), trimethylolpropane mono(polyethylene oxide methyl ether), and aliphatic cyclic structure-containing polyol (b3) with polyisocyanate (C). Patent Literature 2 discloses a polyurethane-polysiloxane network having an antifouling property enhanced by using polysiloxane(s) having two or more isocyanate functional groups in combination as isocyanate.

### Citation List

### Patent Literature

Patent Literature 1: Japanese Patent No. 5316427

Patent Literature 2: Japanese Patent No. 6235329

### Summary of Invention

### Technical Problem

For higher functions of polyurethane, the introduction of new functional groups has been studied while the requirements for various properties of durability described above are satisfied. However, for the introduction of new functional groups, a method of blending three or more types of polyol components, as in Patent Literature 1, easily causes, for example, reduction in reaction rate with an isocyanate group due to unintended gelation and the like at the time of mixing with isocyanate, and tends to have the difficulty in forming a desired three-dimensional mesh-like network. This rather impairs the durability of the resulting polyurethane, disadvantageously causing trade-off. Furthermore, in Patent Literature 1, a flexible alkyl group is used as a main backbone structure, and a polyol component having a side chain is introduced to this main backbone structure. Therefore, polyurethane obtained using this material disadvantageously has weak intermolecular interaction and poor heat resistance.

Use of polysiloxane diisocyanate, as in Patent Literature 2, causes a functional group polysiloxane to be incorporated in the main backbone of polyurethane. In the case of introducing a functional group to the main backbone of polyurethane as mentioned above, a functional group-containing component needs to be added in a relatively large amount for exerting an expected functionality. This inevitably restricts the ratios of other components used, disadvantageously causing trade-off with other physical properties.

Accordingly, an object of the present invention is to provide a novel polyol-containing composition and the like capable of forming polyurethane or aqueous polyurethane that is not only excellent in durability but has various functionalities enhanced with the introduction of a functional group. Another object of the present invention is to provide high-quality polyurethane and aqueous polyurethane and the like obtainable using the novel polyol-containing composition described above.

## Solution to Problem

The present inventors have conducted diligent studies to attain the objects and consequently completed the present invention by finding that a hydroxy compound having a specific structure where a functional group is introduced as a side chain having relatively high mobility is used as a polyol component, whereby the trade-off described above is unlikely to occur, and also finding that this can achieve high-quality polyurethane or aqueous polyurethane that is not only excellent in durability but has various functionalities enhanced with the introduction of a functional group. Specifically, the present invention provides the following various specific aspects.

(1) A polyol-containing composition comprising at least one hydroxy compound, wherein

the polyol-containing composition has a number-average molecular weight of 300 to 5,000, and
the at least one hydroxy compound has: at least one main backbone structure selected from the group consisting of an isocyanurate backbone, an iminooxadiazinedione backbone, a biuret backbone, an allophanate backbone, an aromatic backbone, and an alicyclic backbone; at least one sub-backbone structure selected from the group consisting of a carbonate bond, an ether bond, and an ester bond, and connected directly or via a linking group to the main backbone structure; at least two or more terminal hydroxy groups connected directly or via a linking group to the sub-backbone structure; and at least one functional group other than a hydroxy group connected directly or via a linking group to the main backbone structure.

(2) The polyol-containing composition according to (1), wherein
a content ratio of the functional group is 0.1 to 60.0 parts by mass per 100 parts by mass in total of the polyol-containing composition.
(3) The polyol-containing composition according to (1) or (2), wherein
a content ratio of the functional group is 0.1 to 20.0 parts by mass per 100 parts by mass in total of the polyol-containing composition.
(4) The polyol-containing composition according to any one of (1) to (3), wherein
the functional group is at least one group selected from the group consisting of a hydrophilic group, a hydrophobic group, an adsorbable group, and a cross-linkable group.
(5) The polyol-containing composition according to any one of (1) to (4), wherein
the functional group is a hydrophilic group.
(6) The polyol-containing composition according to any one of (1) to (5), wherein
the functional group is a hydrophobic group.
(7) The polyol-containing composition according to any one of (1) to (6), wherein
the functional group is an adsorbable group.
(8) The polyol-containing composition according to any one of (1) to (7), wherein
the functional group is a cross-linkable group.
(9) The polyol-containing composition according to any one of (1) to (8), wherein
the functional group is at least two or more groups selected from the group consisting of a hydrophilic group, a hydrophobic group, an adsorbable group, and a cross-linkable group.
(10) The polyol-containing composition according to any one of (1) to (9), wherein
the at least one hydroxy compound has a structure represented by the following formula (I):

Formula (I)

$$(R^1\text{-}X^1\text{-}FG)m$$

|

$$Z\text{-}(R^1\text{-}X^2\text{-}P\text{-}OH)n$$

wherein m is an integer of 1 or larger, n is an integer of 2 or larger, Z is at least one member selected from the group consisting of an isocyanurate backbone, an iminooxadiazinedione backbone, a biuret backbone, an allophanate backbone, an aromatic backbone, and an alicyclic backbone, $R^1$ is a linear or branched divalent hydrocarbon group, an alicyclic structure, or a single bond, a plurality of $R^1$ are optionally different from each other, the divalent hydrocarbon group and the alicyclic structure optionally have a heteroatom, $X^1$ is a single bond or a divalent linking

group, a plurality of $X^1$ are optionally different from each other, FG is the functional group, $X^2$ is a single bond or a divalent linking group, a plurality of $X^2$ are optionally different from each other, P is represented by the following formula (II), and a plurality of P are optionally different from each other:

Formula (II)

$$*-\left[R^2-Y\right]_n-R^2-*$$

wherein n is an integer of 1 or larger, * is a bond, $R^2$ is a divalent linear or branched hydrocarbon group, a plurality of $R^2$ are optionally different from each other, $R^2$ optionally has a heteroatom, and Y is at least one member selected from the group consisting of a carbonate bond, an ether bond, and an ester bond.

(11) The polyol-containing composition according to (10), wherein
each of the $X^1$ and the $X^2$ in the formula (I) comprises at least one or more of urethane, urea, and thiourea.

(12) The polyol-containing composition according to (10) or (11), wherein
the Y in the formula (II) is a carbonate bond.

(13) Polyurethane
obtainable using the polyol-containing composition according to any one of (1) to (12).

(14) Aqueous polyurethane
obtainable using the polyol-containing composition according to any one of (1) to (12).

(15) Polyurethane comprising
an addition polymer of the polyol-containing composition according to any one of (1) to (12) and polyfunctional isocyanate.

(16) Aqueous polyurethane comprising
an addition polymer of the polyol-containing composition according to any one of (1) to (12) and polyfunctional isocyanate.

## Advantageous Effects of Invention

The present invention can achieve a novel polyol-containing composition and the like capable of forming polyurethane or aqueous polyurethane that is not only excellent in durability but has various functionalities enhanced with the introduction of a functional group. Use of the polyol-containing composition can achieve high-quality polyurethane and aqueous polyurethane and the like. According to the present invention, a functional group is introduced as a side chain having relatively high mobility, whereby various functionalities can be exerted by a relatively small amount of introduction, and the trade-off described above is unlikely to occur. Hence, the degree of freedom in design can be enhanced for the synthesis of polyurethane and aqueous polyurethane having desired physical properties.

## Description of Embodiments

Hereinafter, one mode for carrying out the present invention (hereinafter, referred to as the "present embodiment") will be described in detail. The embodiments given below are illustrations for describing the present invention, and the present invention is not limited by these embodiments. Specifically, the present invention can be carried out with changes or modifications arbitrarily made without departing from the spirit of the present invention. In the present specification, for example, a numeric range indicated by "1 to 100" encompasses both of the lower limit value "1" and the upper limit value "100". The same holds true for indicating other numeric ranges.

[Polyol-containing composition]

A feature of the polyol-containing composition of the present embodiment is a polyol-containing composition comprising at least one hydroxy compound, wherein the polyol-containing composition has a number-average molecular weight of 300 to 5,000, and the at least one hydroxy compound has: at least one main backbone structure selected from the group consisting of an isocyanurate backbone, an iminooxadiazinedione backbone, a biuret backbone, an allophanate backbone, an aromatic backbone, and an alicyclic backbone; at least one sub-backbone structure selected from the group consisting of a carbonate bond, an ether bond, and an ester bond, and connected directly or via a linking group to the main backbone structure; at least two or more terminal hydroxy groups connected directly or via a linking group to the sub-backbone structure; and at least one functional group other than a hydroxy group connected directly or via a linking group to the main backbone structure.

The polyol-containing composition of the present embodiment having the feature described above is unlikely to cause the trade-off described above and is capable of forming high-quality polyurethane or aqueous polyurethane that is not only excellent in durability but has various functionalities enhanced with the introduction of a functional group. The functional group means an arbitrary functional group other than a hydroxy group. The functional group has specific functions and thereby enables high-quality polyurethane or aqueous polyurethane to be formed. Specific examples of the functional group include, but are not particularly limited to, hydrophilic groups, hydrophobic groups, adsorbable groups, and cross-linkable groups. The specific hydroxy compound may have only one functional group or may have two or more arbitrary functional groups. The specific hydroxy compound may have only one functional group selected from the group consisting of, for example, a hydrophilic group, a hydrophobic group, an adsorbable group, and a cross-linkable group or may have two or more or three or more functional groups selected therefrom.

The polyol-containing composition of the present embodiment comprises at least one hydroxy compound. In the present specification, the at least one hydroxy compound, which is an essential component, is referred to as a "specific hydroxy compound", and a hydroxy compound serving as an arbitrary component other than this specific hydroxy compound is referred to as an "additional hydroxy compound". Examples of the additional hydroxy compound include, but are not particularly limited to, polyhydric alcohol compounds other than the specific hydroxy compound, polycarbonate polyol other than the specific hydroxy compound, and polyols described in Japanese Patent Laid-Open No. 2018-012769, such as polyester polyol, alkanediol, acrylic polyol, polyether polyol, polyester polyol, polyolefin polyol, and fluorine polyol.

The polyol-containing composition of the present embodiment may be a single compound containing only the specific hydroxy compound mentioned above or may be a mixture of the specific hydroxy compound mentioned above and an additional hydroxy compound. The polyol-containing composition of the present embodiment may further comprise a component other than the specific hydroxy compound mentioned above and the additional hydroxy compound (hereinafter, also simply referred to as an "additional component") without excessively inhibiting the advantageous effects of the present invention.

The polyol-containing composition of the present embodiment has a number-average molecular weight (Mn) of 300 to 5,000. When the number-average molecular weight falls within the above range, a polyurethane coating film or an aqueous polyurethane coating film excellent in water dispersibility and appearance at the time of coating film formation can be formed. The number-average molecular weight of the polyol-containing composition is preferably 500 or higher, further preferably 800 or higher, and preferably 3,500 or lower, further preferably 2,700 or lower. The number-average molecular weight of the polyol-containing composition can be calculated by GPC (gel permeation chromatography) measurement (THF) described in Examples mentioned later. Examples of the method for controlling the number-average molecular weight of the polyol-containing composition of the present embodiment within the above range include, but are not particularly limited to, a method of adjusting the ratios of starting materials such that the number-average molecular weight falls within the above range when the polyol-containing composition is produced, and a method of adding and/or extracting a polyhydric alcohol compound when the polyol-containing composition is produced.

The molecular weight distribution (weight-average molecular weight (Mw) / number-average molecular weight (Mn)) of the polyol-containing composition of the present embodiment is not particularly limited. The lower limit is preferably 1.00 or more, more preferably 1.20 or more, further preferably 1.50 or more, still further preferably 1.80 or more, particularly preferably 2.00 or more, more particularly preferably 2.10 or more, extremely preferably 2.20 or more. The upper limit of the molecular weight distribution is not particularly limited and is preferably 7.00 or less, more preferably 6.00 or less, further preferably 5.00 or less, still further preferably 4.50 or less, particularly preferably 4.00 or less, more particularly preferably 3.70 or less, extremely preferably 3.50 or less, more extremely preferably 3.30 or less. In this context, the numeric range of the molecular weight distribution (Mw/Mn) of the polyol-containing composition may be defined by appropriately combining the lower limit value and the upper limit value. The numeric range of the molecular weight distribution may be, for example, 1.00 to 6.00, 1.20 to 5.00, 1.50 to 4.50, 1.80 to 4.00, 2.00 to 3.70, 2.10 to 3.50, or 2.00 to 3.30. The molecular weight distribution of the polyol-containing composition of the present embodiment falls within the above range, whereby, for example, the resulting polyurethane tends to be excellent in coating film appearance. The weight-average molecular weight and the number-average molecular weight of the polyol-containing composition of the present embodiment can be calculated by GPC (gel permeation chromatography) measurement (THF) described in Examples mentioned later. The molecular weight distribution (Mw/Mn) can be determined according to the following expression on the basis of the calculated weight-average molecular weight and number-average molecular weight.

Molecular weight distribution (Mw/Mn) = Weight-average molecular weight (Mw)/Number-average molecular weight (Mn)

In the polyol-containing composition of the present embodiment, the number of functional groups calculated

according to the following expression is preferably 1.20 to 10.00, more preferably 1.30 to 8.00, further preferably 1.40 to 6.00, still further preferably 1.50 to 5.00, particularly preferably 1.60 to 4.00, more particularly preferably 1.70 to 3.50, extremely preferably 1.80 to 3.00.

$$\text{The number of functional groups} = Mn \times OHV / 56.11 / 1000$$

wherein Mn represents the number-average molecular weight of the polyol-containing composition determined by GPC measurement (THF), and OHV represents the hydroxyl value of the polyol-containing composition.

The content ratio of the functional group is not particularly limited and is preferably 0.1 to 60 parts by mass, more preferably 0.1 to 40 parts by mass, further preferably 0.1 to 20 parts by mass, more preferably 0.2 to 20 parts by mass, further preferably 0.5 to 20 parts by mass, extremely preferably 1 to 10 parts by mass, per 100 parts by mass in total of the polyol-containing composition.

<Specific hydroxy compound>

The specific hydroxy compound has: at least one main backbone structure selected from the group consisting of an isocyanurate backbone, an iminooxadiazinedione backbone, a biuret backbone, an allophanate backbone, an aromatic backbone, and an alicyclic backbone; at least one sub-backbone structure selected from the group consisting of a carbonate bond (-O-(C=O)-O-), an ether bond (-O-), and an ester bond (-(C=O)-O-), and connected directly or via a linking group to the main backbone structure; at least two or more terminal hydroxy groups (-OH) connected directly or via a linking group to the sub-backbone structure; and at least one functional group other than a hydroxy group connected directly or via a linking group to the main backbone structure.

The specific hydroxy compound described above is a polyol compound having the aforementioned main backbone structure and the aforementioned sub-backbone structure having two or more terminal hydroxy groups. The specific hydroxy compound having such a structure is excellent in durability such as heat resistance, water resistance, and chemical resistance. Furthermore, the main backbone structure has a functional group introduced as a side chain having relatively high mobility, whereby various functionalities are exerted by a relatively amount of introduction. Specific examples of the functional group include, but are not particularly limited to, hydrophilic groups, hydrophobic groups, adsorbable groups, and cross-linkable groups.

The hydrophilic group means a functional group having high affinity for water. The hydrophilic group is introduced as the functional group, whereby the water dispersibility of polyurethane or aqueous polyurethane obtainable using the polyol-containing composition of the present embodiment can be improved. Examples of the hydrophilic group include, but are not particularly limited to, nonionic hydrophilic groups, anionic hydrophilic groups, cationic hydrophilic groups, and zwitterionic hydrophilic groups. Among them, a nonionic hydrophilic group and an anionic hydrophilic group are preferred from the viewpoint of versatility, etc. In this context, the hydrophilic group excludes a hydroxy group.

Examples of the nonionic hydrophilic group include, but are not particularly limited to, oxyalkylene groups and polyhydric esters composed of polyhydric alcohols and fatty acids. Specific examples thereof include oxyethylene alkyl ether (polyethylene glycol monomethyl ether, polypropylene glycol monomethyl ether, etc.).

Examples of the anionic hydrophilic group include, but are not particularly limited to, carboxy groups, sulfonic acid groups, and phosphoric acid groups. Among them, a carboxy group and a sulfonic acid group are preferred, and a carboxylic acid group is more preferred, from the viewpoint of water resistance, etc.

Examples of the cationic hydrophilic group include, but are not particularly limited to, tetraalkylammonium groups.

Examples of the zwitterionic hydrophilic group include, but are not particularly limited to, groups having a betaine structure such as a carboxybetaine group, a sulfobetaine group, and a phosphorylbetaine group, which have anionic and cationic structures in the same molecule.

The content ratio of the hydrophilic group is not particularly limited and is preferably 0.1 to 60 parts by mass, more preferably 0.2 to 40 parts by mass, further preferably 0.5 to 20 parts by mass, extremely preferably 1 to 10 parts by mass, per 100 parts by mass in total of the polyol-containing composition. The hydrophilic group content in the polyol-containing composition according to the present embodiment falls within the above range, whereby the water dispersibility of the polyol-containing composition or polyurethane or aqueous polyurethane obtainable using the polyol-containing composition tends to be enhanced, and further, the water resistance of the resulting polyurethane coating film also tends to be enhanced at the same time therewith.

The hydrophobic group means a functional group capable of decreasing the surface free energy of the resulting polyurethane or aqueous polyurethane. The hydrophobic group is introduced as the functional group, whereby the water-repellent system of a polyurethane coating film obtainable using the polyol-containing composition can be improved.

Examples of the hydrophobic group include, but are not particularly limited to, linear or branched hydrocarbon

groups having 3 or more carbon atoms and optionally having a heteroatom, and groups having a polydialkylsiloxane structure. The number of carbon atoms in the hydrocarbon group is preferably 5 or more, more preferably 6 or more, extremely preferably 7 or more.

The content ratio of the hydrophobic group is not particularly limited and is preferably 0.1 to 60 parts by mass, more preferably 0.2 to 30 parts by mass, further preferably 0.5 to 20 parts by mass, extremely preferably 1 to 10 parts by mass, per 100 parts by mass in total of the polyol-containing composition. The hydrophobic group content in the polyol-containing composition according to the present embodiment falls within the above range, whereby the water repellency and coating film appearance of a polyurethane coating film or an aqueous polyurethane coating film obtainable using the polyol-containing composition tend to be enhanced.

The adsorbable group means a functional group capable of being adsorbed to an adjacent base material through a chemical bond or physical interaction, for example, van der Waals' force, a hydrogen bond, or electrostatic interaction. The adsorbable group is introduced as the functional group, whereby the adhesion of a polyurethane coating film or an aqueous polyurethane coating film obtainable using the polyol-containing composition to a base material can be enhanced.

Examples of the adsorbable group that is adsorbed via a chemical bond include, but are not particularly limited to, alkoxysilyl groups and phenolic hydroxyl groups. Examples of the adsorbable group that is adsorbed via physical interaction include, but are not particularly limited to, phenyl groups, amide groups, and urea groups. The introduction of the same structure as that of a base material is also effective. For example, as for a PET base material, adsorbability to the PET base material can be improved by introducing a polyester structure for the purpose of introducing an ester group.

The content ratio of the adsorbable group is not particularly limited and is preferably 0.1 to 30 parts by mass, more preferably 0.2 to 15 parts by mass, further preferably 0.5 to 10 parts by mass, per 100 parts by mass in total of the polyol-containing composition. The adsorbable group content in the polyol-containing composition according to the present embodiment falls within the above range, whereby the adsorbability of a polyurethane coating film and an aqueous polyurethane coating film obtainable using the polyol-containing composition to a base material tends to be enhanced, and the storage stability of the resulting polyurethane or aqueous polyurethane tends to be enhanced.

The cross-linkable group means a functional group capable of causing cross-linking reaction. The adsorbable group is introduced as the functional group, whereby the durability of the resulting polyurethane coating film or aqueous polyurethane coating film can be improved. The cross-linking by the cross-linkable group may be intramolecular cross-linking or intermolecular cross-linking. For the intermolecular cross-linking, a curing agent having a functional group reactable with the cross-linkable group may be arbitrarily used in combination therewith at the time of preparation of a polyurethane coating film or an aqueous polyurethane coating film.

Examples of the cross-linkable group include, but are not particularly limited to, epoxy groups, isocyanate groups, unsaturated carbon bonds, thiol groups, and carboxy groups. The cross-linkable group may be protected with a protective group for the purpose of, for example, improving the storage stability of the resulting polyurethane or aqueous polyurethane. Examples of the protected cross-linkable group include, but are not particularly limited to, isocyanate groups to which a β-ketoester group, an azole group, or a secondary amino group is bonded, and carboxy groups to which tertiary carbon such as a tert-butyl group is bonded.

The content ratio of the cross-linkable group is not particularly limited and is preferably 0.1 to 50 parts by mass, more preferably 0.2 to 30 parts by mass, further preferably 0.5 to 20 parts by mass, per 100 parts by mass in total of the polyol-containing composition. The cross-linkable group content in the polyol-containing composition according to the present embodiment falls within the above range, whereby the durability of a polyurethane coating film or an aqueous polyurethane coating film obtainable using the polyol-containing composition tends to be enhanced, and the storage stability of the resulting polyurethane and aqueous polyurethane tends to be enhanced.

Specific examples of the specific hydroxy compound described above include compounds having a structure represented by the following formula (I):

Formula (I)

$$\begin{array}{l}(R^1\text{-}X^1\text{-}FG)m \\ \quad | \\ Z\text{-}(R^1\text{-}X^2\text{-}P\text{-}OH)n\end{array}$$

wherein m is an integer of 1 or larger, n is an integer of 2 or larger, Z is at least one member selected from the group consisting of an isocyanurate backbone, an iminooxadiazinedione backbone, a biuret backbone, an allophanate backbone, an aromatic backbone, and an alicyclic backbone, $R^1$ is a linear or branched divalent hydrocarbon group, an alicyclic structure, or a single bond, a plurality of $R^1$ are optionally different from each other, the divalent hydrocarbon group and the alicyclic structure optionally have a heteroatom, $X^1$ is a single bond or a divalent linking group, a plurality of $X^1$ are optionally different from each other, FG is the functional group, $X^2$ is a single bond or a divalent linking group, a plurality of $X^2$ are optionally different from each other, P is represented by the following formula (II), and a plurality of P are optionally different from each other:

Formula (II)

$$* \left[ R^2 - Y \right]_n R^2 - *$$

wherein n is an integer of 1 or larger, * is a bond, $R^2$ is a divalent linear or branched hydrocarbon group, a plurality of $R^2$ are optionally different from each other, $R^2$ optionally has a heteroatom, and Y is at least one member selected from the group consisting of a carbonate bond, an ether bond, and an ester bond.

In the formula (I), Z is at least one member selected from the group consisting of an isocyanurate backbone, an iminooxadiazinedione backbone, a biuret backbone, an allophanate backbone, an aromatic ring backbone, and an alicyclic backbone. Among them, an isocyanurate backbone, an iminooxadiazinedione backbone, a biuret backbone, an allophanate backbone, and an alicyclic backbone are preferred, and an isocyanurate backbone, an iminooxadiazinedione backbone, and a biuret backbone are more preferred. Z can comprise one of these members and may be used in combination with a main backbone structure other than those listed here.

In the formula (I), $X^1$ is a single bond or a divalent linking group. Examples of the divalent linking group include ester bonds, amide bonds, urea bonds, urethane bonds, thiourea bonds, and thioether bonds. Among them, $X^1$ is more preferably a single bond, a urea bond, a urethane bond, or a thiourea bond, further preferably a urea bond or a urethane bond. $X^1$ can comprise one of these members and may be used in combination with a linking group other than those listed here.

In the formula (I), $X^2$ is a single bond or a divalent linking group. Examples of the divalent linking group include ester bonds, amide bonds, urea bonds, urethane bonds, thiourea bonds, and thioether bonds. Among them, $X^2$ is more preferably a single bond, a urea bond, a urethane bond, or a thiourea bond, further preferably a urea bond or a urethane bond. $X^2$ can comprise one of these members and may be used in combination with a linking group other than those listed here.

In the formula (I), each of $X^1$ and $X^2$ preferably comprises at least one or more of urethane, urea, and thiourea. In this respect, more preferably, $X^1$ comprises at least one or more of urethane, urea, and thiourea, and $X^2$ comprises at least one or more of urethane, urea, and thiourea.

In the formula (I), $R^1$ is a linear or branched divalent hydrocarbon group, an alicyclic structure, or a single bond. A plurality of $R^1$ are optionally different from each other, and the divalent hydrocarbon group optionally has a heteroatom. The molecular weight of $R^1$ is not particularly limited. The lower limit is preferably 20 or higher, more preferably 30 or higher, further preferably 40 or higher, and the upper limit is preferably 3000 or lower, more preferably 2500 or lower, further preferably 2200 or lower.

In the formula (I), specific examples of $R^1$ include, but are not particularly limited to, an ethylene group, a propylene group, a butylene group, a 2-methylpropyl group, a pentylene group, a hexylene group, a heptylene group, an octylene group, a nonylene group, a decylene group, an oxyethylene group, an oxytetramethylene group, a polyoxyethylene group, a polyoxytetramethylene group, a fluoroalkyl group, a perfluoroalkyl group, an isopropylene group, an isobutylene group, a tert-butylene group, an isopentylene group, a 2,2-dimethyltrimethylene group, an isohexylene group, an isoheptylene group, a cyclopentylene group, a cyclohexylene group, a dihydroisophorone group, an isooctylene group, an oxy-1-methylethylene group, an oxy-2,2-dimethyltrimethylene group, and a polyoxy-1-methylethylene group. Among them, a propylene group, a butylene group, a pentylene group, a hexylene group, a nonylene group, a decylene group, an oxyethylene group, an oxytetramethylene group, a polyoxyethylene group, a polyoxytetramethylene group, an isopropylene group, an isobutylene group, an isopentylene group, a 2,2-dimethyltrimethylene group, an isohexylene group, an oxy-1-methylethylene group, and a polyoxy-1-methylethylene group are preferred from the viewpoint of versatility, etc.

In the formula (I), m is an integer of 1 or larger, preferably 1 to 2, more preferably 1. In the formula (I), n is an integer of 2 or larger, preferably 2 to 5, more preferably 2 to 4.

In the formula (II), Y is at least one member selected from the group consisting of a carbonate bond, an ether bond, and an ester bond. Among them, a carbonate bond and an ester bond are preferred, and a carbonate bond is further preferred, from the viewpoint of durability, etc. Y can comprise one of these members and may be used in combination with a bond other than those listed here.

In the formula (II), $R^2$ is a linear or branched divalent hydrocarbon group, or a single bond. A plurality of $R^2$ are optionally different from each other, and the divalent hydrocarbon group optionally has a heteroatom. The molecular weight of $R^2$ is not particularly limited. The lower limit is preferably 20 or higher, more preferably 30 or higher, further preferably 40 or higher, and the upper limit is preferably 3000 or lower, more preferably 2500 or lower, further preferably 2200 or lower.

In the formula (I), specific examples of $R^2$ include, but are not particularly limited to, an ethylene group, a propylene group, a butylene group, a 2-methylpropyl group, a pentylene group, a hexylene group, a heptylene group, an octylene group, a nonylene group, a decylene group, an oxyethylene group, an oxytetramethylene group, a polyoxyethylene group, a polyoxytetramethylene group, a fluoroalkyl group, a perfluoroalkyl group, an isopropylene group, an isobutylene group, a tert-butylene group, an isopentylene group, a 2,2-dimethyltrimethylene group, an isohexylene group, an isoheptylene group, an isooctylene group, an oxy-1-methylethylene group, an oxy-2,2-dimethyltrimethylene group, and a polyoxy-1-methylethylene group. Among them, a propylene group, a butylene group, a pentylene group, a hexylene group, a nonylene group, a decylene group, an oxyethylene group, an oxytetramethylene group, a polyoxyethylene group, a polyoxytetramethylene group, an isopropylene group, an isobutylene group, an isopentylene group, a 2,2-dimethyltrimethylene group, an isohexylene group, an oxy-1-methylethylene group, and a polyoxy-1-methylethylene group are preferred from the viewpoint of versatility, etc.

In the formula (II), n is an integer of 1 or larger, preferably 1 to 50, more preferably 3 to 30.

[Method for producing polyol-containing composition]

The polyol-containing composition of the present embodiment can be obtained by synthesizing a specific hydroxy compound by, for example, a method of reacting an excess of a polyol compound and a polyisocyanate compound, or a method of reacting polycarbonate polyol with arbitrary polyol in the presence of a transesterification catalyst. The production method is not particularly limited. If the polyisocyanate used in the method partially has an end having no reactivity with polyol, the resulting polyol has an end having no reactivity as a side chain. Thus, the polyol-containing composition of the present embodiment may be a composition of the specific hydroxy compound alone or may be a mixture of the specific hydroxy compound and an additional hydroxy compound.

The method for reacting a polyol compound with a polyisocyanate compound is not particularly limited and can be carried out, for example, by mixing starting materials and stirring the mixture with heating. The reaction temperature is not particularly limited. The lower limit is preferably 50°C or higher, more preferably 60°C or higher, further preferably 70°C or higher, still further preferably 80°C or higher. The upper limit is preferably 250°C or lower, more preferably 200°C or lower, further preferably 180°C or lower, still further preferably 160°C or lower. The reaction temperature is equal to or higher than the above lower limit value, whereby the reaction can be performed in a shorter time and is excellent in economic performance. The reaction temperature is equal to or lower than the above upper limit value, whereby the resulting polyol can be more effectively prevented from being thermally deteriorated.

The ratio of an isocyanate group to a hydroxyl group (NCO/OH) in the method for reacting a polyol compound with a polyisocyanate compound is not particularly limited and is preferably 0.01 or more and 0.90 or less, more preferably 0.03 or more and 0.40 or less, further preferably 0.04 or more and 0.30 or less, particularly preferably 0.05 or more and 0.20 or less.

The reaction pressure is not particularly limited and is preferably ordinary pressure or higher and 1 MPa or lower. The reaction pressure falls within the above range, whereby the reaction can be more conveniently carried out. In the case of using auxiliary starting materials, the reaction can be more efficiently accelerated by pressurization to some extent in consideration of the vapor pressures and the like of these starting materials.

The progression and completion of the reaction can be confirmed by, for example, GPC (gel permeation chromatography) measurement and FT-IR (Fourier transform infrared spectrophotometer). As the reaction progresses, the size of a peak derived from a starting material is decreased over time in GPC measurement. Thus, the completion of the reaction can be confirmed from the disappearance of the peak. Also, the completion of the reaction can be confirmed from the disappearance of an infrared absorption spectral absorbance (Abs) peak at or near a wavenumber of 2273 $cm^{-1}$ derived from an isocyanate group (-NCO group) by FT-IR. In order to obtain the polyol-containing composition of the present embodiment, for example, the step of performing the dehydration treatment of the starting material used may be performed as a pretreatment before the reaction described above.

[Method for quantifying functional group in polyol-containing composition]

The method for quantifying the functional group in the polyol-containing composition of the present embodiment is not particularly limited. When the amount of a starting material added and the structure are known, the amount of the functional group can be calculated from the amount of a starting material added. When the amount of a starting material added and the structure are unknown, it is desired that the structure of the functional group should be first identified,

followed by quantification by a method appropriate for the functional group. For the method for quantifying the functional group, for example, a hydrophilic group used in Examples mentioned later can be quantified by use of gas chromatography (GC) after hydrolysis of the polyol-containing composition in the presence of a base. If GC measurement is difficult, gel permeation chromatography (GPC) may be used instead of GC. If the functional group itself undergoes hydrolysis, a method of performing quantification by $^1$H-NMR is preferred.

Hydrolysis method

Approximately 5 g of a sample of the polyol-containing composition was precisely weighed into a 100 mL eggplant-shaped flask, to which 50 g of ethanol and 4.0 g of potassium hydroxide were then added. A magnetic stirring bar was placed therein, and the flask was stirred for 1 hour in an oil bath set to 105 ± 5°C so that a carbonate bond moiety was alkali-degraded. Then, the flask was cooled to room temperature. To the reaction solution, several drops of a phenolphthalein indicator were added, and hydrochloric acid was added in small portions until the color disappears. Approximately 40 mL of the supernatant was collected, transferred to a sample bottle, and left standing overnight in a refrigerator having an inside temperature of 5°C. The supernatant thus left standing was filtered through a membrane filter having a pore size of 0.45 μm to obtain a filtrate. The obtained filtrate is subjected to GC analysis or GPC analysis. A functional group concentration in the sample is determined from a concentration calibration curve prepared separately using a functional group component contained in the polyol-containing composition. A mass is calculated from the amount of the solution and divided by the mass of the polyol-containing composition used in alkali degradation, and the resulting value is the content of the functional group in the polyol-containing composition.

Method of performing quantification by $^1$H-NMR

A sample of the polyol-containing composition is dissolved in DMSO-$d_6$, and the solution is subjected to $^1$H-NMR. An integral value derived from a hydroxyl group of polyol is defined as A, and a peak derived from the functional group is defined as B. The content of the functional group can be calculated from the molar concentration of A and the molecular weight of the functional group determined from the ratio between A and B and OHV.

(Polycarbonate polyol)

The polycarbonate polyol as a starting material that may be used in producing the polyol-containing composition of the present embodiment is not particularly limited and can be obtained by, for example, a method for producing polycarbonate polyol described in Comparative Example 1-1. Alternatively, a commercially available product may be used. Examples of the commercially available product include, but are not particularly limited to, T6002, T6001, T5652, T5651, T5650J, T5650E, G4672, T4672, T4671, G3452,T3451, G3450J, and AK011 manufactured by Asahi Kasei Corp.

Polycarbonate polyol having a diol structure introduced in the backbone can be obtained by the transesterification of polycarbonate polyol with arbitrary diol, and this polycarbonate polyol may be used as a starting material. For example, a carbonate compound can be reacted with an arbitrary diol compound in the presence of a transesterification catalyst to obtain polycarbonate polyol. Examples of the transesterification reaction catalyst include, but are not particularly limited to, alkali metals and alkaline earth metals as well as alcoholates thereof, hydrides thereof, oxides thereof, amides thereof, hydroxides thereof, and salts thereof. The polycarbonate polyol synthesized by the method has a structure where diol is introduced in the backbone.

(Polyester polyol)

The polyester polyol as a starting material that may be used in producing the polyol-containing composition of the present embodiment is not particularly limited and can be obtained by, for example, a method for producing polyester polyol described in Japanese Patent Laid-Open No. 2006-328372. Alternatively, a commercially available product may be used. Examples of the commercially available product include, but are not particularly limited to, P-**10 and F-**10 series manufactured by Kuraray Co., Ltd., and POLYLITE manufactured by DIC Corp.

(Polyether polyol)

The polyether polyol as a starting material that may be used in producing the polyol-containing composition of the present embodiment is not particularly limited and can be obtained by, for example, a method for producing polyether polyol described in Japanese Patent No. 3299803. Alternatively, a commercially available product may be used. Examples of the commercially available product include, but are not particularly limited to, polyethylene glycol manufactured by FUJIFILM Wako Pure Chemical Corp.

(Polyisocyanate compound)

Examples of the isocyanate compound as a starting material that may be used in producing the polyol-containing composition of the present embodiment can include, but are not particularly limited to, aliphatic diisocyanate such as hexamethylene diisocyanate and trimethylhexamethylene diisocyanate, alicyclic diisocyanate such as isophorone diisocyanate, aromatic diisocyanate such as tolylene diisocyanate, 4,4'-diphenylmethane diisocyanate (hereinafter, abbreviated to "MDI"), xylylene diisocyanate, and naphthylene diisocyanate, isocyanate compounds having three or more isocyanate groups, such as triphenylmethane-4,4'-4"-triisocyanate, 1,3,5-triisocyanatobenzene, 2,4,6-triisocyanatotoluene, and 4,4'-dimethyldiphenylmethane-2,2',5,5'-tetraisocyanate, iminooxadiazinedione compounds, and isocyanurate-modified products and biuret-modified products of these isocyanates. Examples of a commercially available product of the isocyanate compound include, but are not particularly limited to, "DURANATE (trade name)" series of 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, and WM44-L70G manufactured by Asahi Kasei Corp.

In addition to those described above, a synthesized product may be used as the polyisocyanate compound as a starting material that may be used in producing the polyol-containing composition of the present embodiment. For example, polyisocyanate having an allophanate structure obtained through the reaction of an alcohol, diisocyanate, and an allophanate catalyst, or polyisocyanate having a biuret structure obtained through the reaction of amine and diisocyanate may be used, as described in WO2003/027163. In this respect, when the alcohol or the amine is monofunctional, polyisocyanate having a side chain derived from the structure of the alcohol or the amine can be obtained. Examples of the structural identification of the polyisocyanate compound include, but are not particularly limited to, a method based on $^{13}$C-NMR described in Japanese Patent No. 6647130.

[Polyurethane and aqueous polyurethane]

The polyurethane and the aqueous polyurethane of the present embodiment are obtainable using the polyol-containing composition. The polyurethane and the aqueous polyurethane of the present embodiment are obtainable using the polyol-containing composition, whereby the trade-off of durability with other physical properties mentioned above is unlikely to occur, and a high-quality polyurethane coating film and aqueous polyurethane coating film can be formed. In this context, the polyurethane and the aqueous polyurethane mean those having a number-average molecular weight of at least 10,000 or higher. Examples of the method for measuring the number-average molecular weight of the polyurethane include a method based on static light scattering (SLS) and a method using GPC (DMF) mentioned later.

Each of the polyurethane and the aqueous polyurethane of the present embodiment can be, for example, an addition polymer of the polyol-containing composition and polyfunctional isocyanate (isocyanate having two or more NCO groups, preferably two or more (2 to 4) NCO groups). The polyfunctional isocyanate is not particularly limited, and known polyfunctional isocyanate such as diisocyanate can be used without particular limitations. Each of the polyurethane and the aqueous polyurethane of the present embodiment can be an addition polymer of the polyol-containing composition, the polyfunctional isocyanate, one or more known polyols, and one or more known polyfunctional isocyanates.

[Surface free energy of coating film]

The Owens-Wendt method, the Fowkes method, and the Zisman method are known as methods for measuring the surface free energy of a solid. For example, in the Owens-Wendt method, $\gamma = \gamma^d + \gamma^H$ (*) can hold wherein y represents surface free energy, $\gamma^d$ represents a variance component of the surface free energy, and $\gamma^H$ represents a term for a hydrogen. Also, it is known that $\gamma_L(1 + \cos\theta) = 2(\gamma_S{}^d \cdot \gamma_L{}^d)^{1/2} + 2(\gamma_S{}^h \cdot \gamma_L{}^h)^{1/2}$ (**) can hold wherein $\gamma_S$ represents the surface tension of a solid, and $\gamma_L$ represents the surface tension of a liquid. Thus, the surface free energy y of the polyurethane coating film or the aqueous polyurethane coating film can be calculated according to the expression (*) by adding dropwise two liquids having known $\gamma_L$, measuring the contact angle $\theta$, assigning the values to the expression (**) to solve the system of equations, and thereby calculating the variance component $\gamma^d$ of the surface free energy and the term $\gamma^H$ for a hydrogen group.

Examples

Hereinafter, the present embodiment will be further specifically described with reference to specific Examples and Comparative Examples. However, the present embodiment is not limited by these Examples and Comparative Examples by any means without departing from the spirit of the present invention. Specifically, materials, amounts of usage, ratios, treatment contents, treatment procedures, and the like given below can be appropriately changed or

modified without departing from the spirit of the present invention. Values of various production conditions and evaluation results given below have meanings as preferred upper limit values or preferred lower limit values in an aspect of the present invention, and preferred numeric ranges may be ranges defined by combining the upper limit value or the lower limit value described above and a value of Example described below or values of Examples. Evaluation and physical properties in Examples and Comparative Example mentioned later were made and measured by methods given below. In the present Examples, the terms "parts" and "%" are based on mass unless otherwise specified.

[Measurement of hydroxyl value (OHV)]

The hydroxyl value of polyol or a polyol-containing composition obtained in each of Examples and Comparative Examples mentioned later was measured by the following method. A measuring flask was used, and pyridine was added to 12.5 g of acetic anhydride so that the volume was adjusted to 50 mL to prepare an acetylation reagent. The polyol or the polyol-containing composition obtained in each of Examples and Comparative Examples mentioned later was used as a sample. 1.0 to 10.0 g of the sample was precisely weighed into a 100 mL eggplant-shaped flask and placed therein. 5 mL of the acetylation reagent and 10 mL of toluene were added to the eggplant-shaped flask using a Vollpipette to obtain a solution. Then, a condenser pipe was attached to the eggplant-shaped flask, and the solution was stirred and heated at 100°C for 1 hour. 2.5 mL of distilled water was added to the eggplant-shaped flask using a Vollpipette, and the obtained solution was further heated and stirred for 10 minutes. The solution was cooled for 2 to 3 minutes. Then, 12.5 mL of ethanol was added to the eggplant-shaped flask, and 2 to 3 drops of phenolphthalein were placed therein as an indicator, followed by titration against 0.5 mol/L ethanolic potassium hydroxide. 5 mL of the acetylation reagent, 10 mL of toluene, and 2.5 mL of distilled water were placed in a 100 mL eggplant-shaped flask and heated and stirred for 10 minutes. The obtained solution was then titrated in the same manner as above (blank test). On the basis of the obtained results, the hydroxyl values of the polyol and the polyol-containing composition were calculated according to the following expression (III).

$$\text{Hydroxyl value (mg-KOH/g)} = \{(b - a) \times 28.05 \times f\} / e \quad \text{... (III)}$$

wherein a represents the amount of titration (mL) of the sample, b represents the amount of titration (mL) in the blank test, e represents the amount (g) of the sample, and f represents the factor of the titration solution.

[GPC measurement (THF)]

The weight-average molecular weight (Mw) and the number-average molecular weight (Mn) of polyol or a polyol-containing composition were measured by GPC in accordance with the following method: the polyol or the polyol-containing composition obtained in each of Examples and Comparative Examples mentioned later was used as a sample. The concentration of the measurement sample was adjusted to 0.5% by mass with tetrahydrofuran (hereinafter, referred to as THF). The weight-average molecular weights (Mw) and the number-average molecular weights (Mn) of the polyol and the polyol-containing composition based on standard polystyrene were measured using the following GPC apparatus.

GPC apparatus: HLC-8320 manufactured by Tosoh Corp.

Column: one TSKgel G4000H

one G3000H
two G2000H

Eluent: tetrahydrofuran (THF)

Flow rate: 1.0 mL/min

Column temperature: 40°C

RI detector: RI (included in apparatus HLC-8320)

Calibration curve expression: cubic polynomial

Calibration curve: standard polystyrene (manufactured by Tosoh Corp.)

F-40 (molecular weight: $4.27 \times 10^5$)

F-20 (molecular weight: $1.90 \times 10^5$)

F-10 (molecular weight: $9.64 \times 10^4$)

F-4 (molecular weight: $3.79 \times 10^4$)

F-2 (molecular weight: $1.81 \times 10^4$)

F-1 (molecular weight: $1.02 \times 10^4$)

A-5000 (molecular weight: $5.97 \times 10^3$)

A-2500 (molecular weight: $2.63 \times 10^3$)

A-500

A-1000

The molecular weights of a dimer to a decamer were calculated from A-500 and A-1000.

Dimer (molecular weight: 266)

Trimer (molecular weight: 370)

Tetramer (molecular weight: 474)

Pentamer (molecular weight: 578)

Hexamer (molecular weight: 682)

Heptamer (molecular weight: 786)

Octamer (molecular weight: 890)

Nonamer (molecular weight: 994)

Decamer (molecular weight: 1098)

[GPC measurement (DMF)]

The weight-average molecular weight (Mw) and the number-average molecular weight (Mn) of polyurethane were measured by GPC in accordance with the following method: polyurethane or aqueous polyurethane obtained in each of Application Examples and Application Comparative Examples mentioned later was used as a sample. The concentration of the measurement sample was adjusted to 0.5% by mass with dimethylformamide (hereinafter, referred to as DMF). The weight-average molecular weight (Mw) and the number-average molecular weight (Mn) of the polyurethane based on standard polystyrene were measured using the following GPC apparatus.

GPC apparatus: HLC-8320 manufactured by Tosoh Corp.

Analytical column: three TSKgel SuperHM-H

Guard column: TSKgel guardcolumn H-H

Reference column: TSKgel SuperH-RC

Eluent: N,N-dimethylformamide (DMF)

Flow rate: 0.5 mL/min

Column temperature: 40°C

RI detector: RI (included in apparatus HLC-8320)

Calibration curve expression: cubic polynomial

Calibration curve: standard polystyrene (manufactured by Tosoh Corp.)

F-40 (molecular weight: 4.27 × 105)

F-20 (molecular weight: 1.90 × 105)

F-10 (molecular weight: 9.64 × 104)

F-4 (molecular weight: 3.79 × 104)

F-2 (molecular weight: 1.81 × 104)

F-1 (molecular weight: 1.02 × 104)

A-5000 (molecular weight: 5.97 × 103)

A-2500 (molecular weight: 2.63 × 103)

A-1000 (molecular weight: 2.63 × 103)

[FT-IR measurement]

A polyol-containing composition obtained in each of Examples and Comparative Examples mentioned later was used as a sample. The infrared absorption spectral absorbance of the sample was measured by FT-IR (Fourier transform infrared spectrophotometer) in accordance with the following method: the measurement sample was thinly spread over a rock salt plate (NaCl plate, 35 × 35 × 5 mm), and the infrared absorption spectral absorbance of the sample was measured by FT-IR using the following apparatus and conditions.

FT-IR apparatus: FT/IR-4600typeA (JASCO Corp.)

Light source: standard light source

Detector: TGS

The number of scans: 16

Degradation: 4 $cm^{-1}$

Zero filling: On

Apodization: Cosine

Gain: Auto (2)

Aperture: Auto (7.1 mm)

Scan speed: Auto (2 mm/sec)

Filter: Auto (30000 Hz)

Data type: equally spaced data

Abscissa: Wavenumber ($cm^{-1}$)

Ordinate: Abs

Start: 400 $cm^{-1}$

End: 40000 $cm^{-1}$

[Structural analysis of polyisocyanate]

The structure of polyisocyanate was analyzed by a method based on $^{13}C$-NMR. The molar ratios of an isocyanurate group, an allophanate group, and a biuret group were determined by $^{13}C$-NMR measurement using Biospin Avance600 (trade name) manufactured by Bruker. Specific measurement conditions were as follows.

$^{13}C$-NMR apparatus: AVANCE600 (manufactured by Bruker)

CryoProbe (manufactured by Bruker)

Cryo Probe

CPDUL

600S3-C/H-D-05Z

Resonance frequency: 150 MHz

Concentration: 60 wt/vol%

Shift reference: $CDCl_3$ (77 ppm)

The number of scans: 10000

Pulse program: zgpg30

(proton complete decoupling, waiting time: 2 sec)

Then, integral values of the following signals were divided by the number of carbon atoms measured, and each molar ratio was determined from the obtained value.

Molar quantity of isocyanurate group (% by mol, represented by "A"): around 148.6 ppm: Integral value / 3

Molar quantity of allophanate group (% by mol, represented by "B"): around 154 ppm: Integral value / 1

Molar quantity of biuret group (% by mol, represented by "C"): around 155.8 ppm: (Integral value - Allophanate group integral value) / 2

[Isocyanate group concentration (% by mass)]

The isocyanate group concentration (% by mass) of a polyisocyanate compound was measured as follows: 1 to 3 g of a polyisocyanate compound produced in each of Production Examples was precisely weighed (W g) into an Erlenmeyer flask, to which 20 mL of toluene was then added to completely dissolve polyisocyanate (composition). Then, 10 mL of a 2 N solution of di-n-butylamine in toluene was added thereto and completely mixed, and the mixture was then left at room temperature for 15 minutes. 70 mL of isopropyl alcohol was further added to this solution and completely mixed. This solution was titrated against a 1 N hydrochloric acid solution (factor F) using an indicator to obtain a titration value $V_2$ mL. The same titration operation as above was performed without the use of polyisocyanate (composition) to obtain a titration value $V_1$ mL. The isocyanate group concentration (% by mass) of the polyisocyanate was calculated from the obtained titration values $V_2$ mL and $V_1$ mL according to the following expression.

$$\text{Isocyanate group concentration} = (V_1 - V_2) \times F \times 42 / (W \times 1000) \times 100$$

[Synthesis of polyisocyanate (PI)]

(Synthesis Example 1)

A four-neck flask equipped with a stirrer, a thermometer, and a condenser pipe was charged with 300 g of hexamethylene diisocyanate (hereinafter, also abbreviated to "HDI") and 200 g of polyethylene glycol monomethyl ether (mPEG) (manufactured by Nippon Nyukazai Co., Ltd., trade name "MPG-081"), and urethanization reaction was performed at 90°C for 1 hour with stirring. Subsequently, the temperature was elevated to 130°C, and 0.26 g of a solution of zirconyl 2-ethylhexanoate in mineral spirit with a solid content of 20% (manufactured by Nihon Kagaku Sangyo Co., Ltd., a dilution of trade name "Nikka Octics Zirconium 12%" with mineral spirit) was added thereto as an allophanation catalyst. One hour later, the reaction was terminated by the addition of 0.097 g (2.0 times the mol of the allophanation catalyst) of a solution of pyrophosphoric acid (reagent manufactured by Katayama Chemical Industrie Co., Ltd.) in isobutanol with a solid content of 50% when elevation in refractive index of the reaction solution reached 0.008. As a result of measuring $^{13}$C-NMR of the reaction solution, an allophanate group was confirmed. Unreacted HDI was removed at 160°C (0.2 Tor) for the first run and 150°C (0.1 Tor) for the second run using a falling thin-film distillation apparatus to obtain polyisocyanate PI1-1 having a PEG side chain structure and an allophanate structure. NCO% was 7.9%.

(Synthesis Example 2)

A four-neck flask equipped with a stirrer, a thermometer, and a condenser pipe was charged with 300 g of HDI and 20.1 g of sodium 2-aminoethanesulfonate (manufactured by Alfa Chemistry), and reaction was performed at 40°C for 1 hour with stirring. Then, reaction was performed at 160°C for 1 hour. As a result of measuring $^{13}$C-NMR of the reaction solution, it was confirmed from the molar ratio of a biuret group produced that the compound was constituted by only a biuret group. Unreacted HDI was removed at 160°C (0.2 Tor) for the first run and 150°C (0.1 Tor) for the second run using a falling thin-film distillation apparatus to obtain polyisocyanate PI1-2 having a sulfonic acid side chain structure derived from 2-aminoethanesulfonic acid, and a biuret structure. NCO% was 17.9%.

(Synthesis Example 3)

A 300 ml separable flask was charged with 100 g of 24A-100 (manufactured by Asahi Kasei Corp.: 24.0% NCO) as polyisocyanate to be modified, 14.8 g of DL-lactic acid (manufactured by Tokyo Chemical Industry Co., Ltd.: hereinafter referred to as LA) as a modification starting material for isocyanate, and 0.047 g (300 ppm based on a solid content) of dibutyl phosphate as a catalyst, and reaction was performed at 50°C for 4 hours with stirring under nitrogen. The ratio of the modification starting material to NCO was set to 30 mol%. The reaction was terminated by confirming that NCO% reached a theoretical amount ±3%. This operation produced polyisocyanate PI1-3 having a biuret structure and a carboxy group side chain structure derived from LA. NCO% was 14.0%.

(Synthesis Examples 4 to 8)

Polyisocyanates PI1-4 to PI1-8 were obtained in the same manner as above except that the polyisocyanate to be modified, the modification starting material, and the modification ratio based on the mol of added NCO were changed as described in Table 1.

(Synthesis Example 9)

Polyisocyanate PI2-1 having an alkyl fluoride structure derived from HFBL in a side chain was obtained in the same manner as in Synthesis Example 2 except that 60.3 g of HFBL was used instead of sodium 2-aminoethanesulfonate.

(Synthesis Examples 10 to 13)

Polyisocyanates PI2-2 to PI2-5 were obtained in the same manner as above except that the polyisocyanate to be modified, the modification starting material, and the modification ratio based on the mol of added NCO were changed as described in Table 1.

(Synthesis Examples 14 to 22)

Polyisocyanates PI1-10 to PI1-14 and PI2-6 to PI2-9 were obtained in the same manner as above except that the polyisocyanate to be modified, the modification starting material, and the modification ratio based on the mol of added

NCO were changed as described in Table 2.

Tables 1 and 2 show each synthesized polyisocyanate and NCO% thereof, the polyisocyanate to be modified, the modification starting material, and the modification ratio thereof (% by mol based on the number of moles of NCO in the polyisocyanate) used in the synthesis of the polyisocyanate, and % by mass of the modification starting material in the polyisocyanate.

The starting materials described in Tables 1 and 2 are as described below.

Polyisocyanate to be modified

24A-100: polyisocyanate having a biuret structure, manufactured by Asahi Kasei Corp., 24.0% NCO)

TLA-100: polyisocyanate having an isocyanurate structure, manufactured by Asahi Kasei Corp., 23.3% NCO

CHTI: polyisocyanate having an alicyclic structure, synthesized by the method described in Tetrahedron, 2007, vol. 63, # 31, p. 7285-7301, 60.8% NCO

CHTI

Desmodur N3900: polyisocyanate having an iminooxadiazinedione structure, manufactured by Covestro, 23.5% NCO

VESTANAT T1890: isophorone diisocyanate-based isocyanurate, manufactured by Evonik, 17.3% NCO; since this product is a dilution with butyl acetate with a solid content of 70%, butyl acetate was distilled off after modification.

Modification starting material

mPEG: polyethylene glycol monomethyl ether (used for the introduction of a PEG structure to a side chain, manufactured by Nippon Nyukazai Co., Ltd., trade name "MPG-081"; monofunctional)

Sodium 2-aminoethanesulfonate (used for the introduction of a sulfonic acid group, manufactured by Alfa Chemistry)

LA: DL-lactic acid (used for the introduction of a carboxy structure, manufactured by Tokyo Chemical Industry Co., Ltd.)

m-dPEG$_4$-thiol (used for the introduction of a PEG structure to a side chain, manufactured by Sigma Aldrich Co., LLC)

m-dPEG4- thiol

m-dPEG$_4$-amine (used for the introduction of a PEG structure to a side chain, manufactured by Sigma Aldrich Co., LLC)

$H_2N-CH_2CH_2-(O-CH_2CH_2)_3-O-CH_3$

m-dPEG4-amine

APTES: aminopropyltriethoxysilane (used for the introduction of a trialkoxysilyl structure, manufactured by Tokyo Chemical Industry Co., Ltd.)

DMTAZ: 3,5-dimethylpyrazole (introduced as a protective group for an isocyanate group, manufactured by Tokyo Chemical Industry Co., Ltd.)

HFBL: 2,2,3,3,4,4,4-heptafluoro-1-butanol (used for the introduction of an alkyl fluoride structure, manufactured by Tokyo Chemical Industry Co., Ltd.)

1-Hexadodecylthiol (used for the introduction of a hydrocarbon group having 16 carbon atoms, manufactured by Tokyo Chemical Industry Co., Ltd.)

SILAPLANE FM-0411 (used for the introduction of a polydimethylsiloxane structure, manufactured by JNC Corp.)

[Table 1]

| | | | Composition | | | | | | |
|---|---|---|---|---|---|---|---|---|---|
| | Polyisocyanate | NCOwt% | Polyisocyanate to be modified | Modification starting material 1 | Modification ratio [vs NCOmol%] | Modification starting material 2 | Modification ratio [vs NCOmol%] | Modification starting material 1 wt% | Modification starting material 2 wt% |
| Synthesis Example 1 | PI1-1 | 7.9% | - | mPEG | - | - | - | 67% | - |
| Synthesis Example 2 | PI1-2 | 17.9% | - | Sodium 2-aminoethanesulfonate | - | - | - | 31% | - |
| Synthesis Example 3 | PI1-3 | 14.0% | 24A-100 | LA | 30 | - | - | 13% | - |
| Synthesis Example 4 | PI1-4 | 12.6% | TLA-100 | mPEG | 15 | - | - | 36% | - |
| Synthesis Example 5 | PI1-5 | 12.9% | TLA-100 | m-dPEG$_4$-thiol | 30 | - | - | 44% | - |
| Synthesis Example 6 | PI1-6 | 12.9% | TLA-100 | m-dPEG$_4$-amine | 30 | - | - | 43% | - |
| Synthesis Example 7 | PI1-7 | 21.9% | CHTI | mPEG | 5 | HFBA | 20 | 24% | 28% |
| Synthesis Example 8 | PI1-8 | 9.9% | TLA-100 | mPEG | 15 | DMTAZ | 15 | 35% | 5% |
| Synthesis Example 9 | PI2-1 | 16.1% | - | HFBL | 30 | - | - | 38% | - |
| Synthesis Example 10 | PI2-2 | 6.2% | 24A-100 | SILAPLANE FM-0411 | 30 | - | - | 63% | - |
| Synthesis Example 11 | PI2-3 | 11.6% | 24A-100 | 1-Hexadecylthiol | 30 | - | - | 31% | 4% |
| Synthesis Example 12 | PI2-4 | 6.7% | TLA-100 | SILAPLANE FM-0411 | 25 | APTES | 5 | 57% | 4% |

(continued)

| | | | Composition | | | | | | |
|---|---|---|---|---|---|---|---|---|---|
| | Polyisocyanate | NCOwt% | Polyisocyanate to be modified | Modification starting material 1 | Modification ratio [vs NCOmol%] | Modification starting material 2 | Modification ratio [vs NCOmol%] | Modification starting material 1 wt% | Modification starting material 2 wt% |
| Synthesis Example 13 | PI2-5 | 6.1% | TLA-100 | SILAPLANE FM-0411 | 5 | - | - | 62% | - |

[Table 2]

| | Polyisocyanate | NCOwt% | Composition | | | | | | |
|---|---|---|---|---|---|---|---|---|---|
| | | | Polyisocyanate to be modified | Modification starting material 1 | Modification ratio [vs NCOmol%] | Modification starting material 2 | Modification ratio [vs NCOmol%] | Modification starting material 1 wt% | Modification starting material 2 wt% |
| Synthesis Example 14 | PI1-10 | 15.2% | TLA-100 | mPEG | 10 | - | - | 28% | - |
| Synthesis Example 15 | PI1-11 | 10.5% | TLA-100 | mPEG | 20 | - | - | 43% | - |
| Synthesis Example 16 | PI1-12 | 7.6% | TLA-100 | mPEG | 30 | - | - | 54% | - |
| Synthesis Example 17 | PI1-13 | 7.6% | N3900 | mPEG | 30 | - | - | 54% | - |
| Synthesis Example 18 | PI1-14 | 6.5% | T1890 | mPEG | 30 | - | - | 46% | - |
| Synthesis Example 19 | PI2-6 | 20.9% | TLA-100 | APTES | 5 | - | - | 6% | - |
| Synthesis Example 20 | PI2-7 | 14.1% | TLA-100 | DMTAZ | 30 | - | - | 14% | - |
| Synthesis Example 21 | PI2-8 | 19.4% | - | Isopropyl alcohol | - | - | - | 15% | - |
| Synthesis Example 22 | PI2-9 | 16.2% | - | Neopentyl alcohol | - | - | - | 21% | - |

[Example 1-1]

In a 500 ml separable flask, 300 g of PI1-1 (NCO: 7.9%) and 6.4 g of PEG-1000 (manufactured by FUJIFILM Wako Pure Chemical Corp.) were placed, and reacted at 100°C for 1 hour after purging with nitrogen to obtain POL1-1. NCO/OH (molar ratio) was set to 0.02. The disappearance of a peak derived from NCO was confirmed by FT-IR. The content of mPEG in PI1-1 was calculated by the quantification method using GPC described in the section [Method for quantifying functional group in polyol-containing composition] and was consequently 1.36 wt% per 1.35 wt% calculated from the amount of the starting material added.

[Examples 1-2 to 1-12 and Comparative Example 1-4]

POL1-2 to POL1-12 and POL1-16 were synthesized in the same manner as in Example 1-1 except that as shown in Table 3, the polyisocyanate used was changed to PI1-2 to PI1-8; the alcohol used was changed; and NCO/OH (molar ratio) to the alcohol was changed to the value described in Table 3. The content of the functional group in each example was also calculated in accordance with the aforementioned section [Method for quantifying functional group in polyol-containing composition].

[Comparative Example 1-1]

In accordance with Example 2 of Japanese Patent No. 6276848, a 2 L glass flask (hereinafter, also referred to as a "reactor") having a rectifying tower packed with a structured packing and a stirring apparatus was charged with 458 g of 1,5-pentanediol, 500 g of 1,6-hexanediol, and 760 g of ethylene carbonate, and 0.086 g of titanium tetra-n-butoxide was then placed therein as a catalyst. While a portion of the effluent was extracted, reaction was performed at a reaction temperature of 160 to 175°C for 12 hours. Subsequently, the reactor was connected directly to a condenser. The reaction temperature was elevated to 175 to 190°C, and the pressure was then gradually lowered. While the hydroxyl value of produced polycarbonate polyol appropriately sampled was measured, a diol component in the reactor was distilled off to obtain polycarbonate polyol (860 g) having a hydroxyl value of 109.8 mgKOH/g. To the obtained polycarbonate polyol (600 g), 200 g of PEG-1000 (manufactured by FUJIFILM Wako Pure Chemical Corp., "Polyethylene Glycol 1000" (trade name)) was added as a nonionic hydrophilic group-forming starting material, and the mixture was stirred at 150°C for 6 hours. Then, the reaction temperature was lowered to 115°C. 0.056 g of 85% phosphoric acid was added thereto, and the mixture was stirred at 115°C for 3 hours to obtain POL1-13 having a hydroxyl value of 112.2 mgKOH/g.

[Comparative Examples 1-2 and 1-3]

POL1-14 and POL1-15 were synthesized in the same manner as in Comparative Example 1-1 except that the masses of PEG and OFHD were as described in Table 3.

[Comparative Example 1-5]

Ymer N120 (manufactured by Perstorp AB) was used as POL1-17.

[Examples 1-13 to 1-20]

POL1-18 to POL1-25 were synthesized in the same manner as in Example 1-1 except that as shown in Table 4, the polyisocyanate and the alcohol were changed; and NCO/OH (molar ratio) to the alcohol was changed to the value described in Table y. The content of the functional group in each example was also calculated in accordance with the aforementioned section [Method for quantifying functional group in polyol-containing composition].

Tables 3 and 4 show the starting materials used in the synthesis of the modified polyol, NCO/OH (molar ratio), and composition. FG1 and FG2 described in the composition represent a functional group (FG) contained in the modified polyol, and parts by mass thereof. In this context, the parts by mass represent the mass of the structure described in FG. Z, $R^1$, $X^1$, $X^2$, P, $R^2$, and Y correspond to Z, $R^1$, $X^1$, $X^2$, P, $R^2$, and Y, respectively, described in the formula (I) and the formula (II). The masses described in FG1 and FG2 of Tables 3 and 4 represent the masses of partial structures given below. In each partial structure, * represents a bond.

Carboxy group :

P E G :

Fluoroalkyl :

Azole :

The starting materials described in Tables 3 and 4 are as follows.

PEG-1000: polyethylene glycol (used for the introduction of a PEG structure to the backbone of the polyol-containing composition through rection with polyisocyanate; manufactured by FUJIFILM Wako Pure Chemical Corp., "Polyethylene Glycol 1000" (trade name))

$NH_2$-PEG-OH

NH2-PEG-OH

SH-PEG-OH

SH-PEG-OH

P-1010: copolyester of 2-methylpropanediol and adipic acid (used for the introduction of a polyester structure to the backbone of the polyol-containing composition through rection with polyisocyanate; manufactured by Kuraray Co., Ltd., "Kuraray Polyol P-1010" (trade name))

PTMG2000: used for the introduction of a polyether structure to the backbone of the polyol-containing composition; manufactured by Mitsubishi Chemical Corp.

PPG: polypropylene glycol, manufactured by Sanyo Chemical Industries, Ltd., number-average molecular weight: 1000

The following carbonate diol was used for the introduction of a carbonate structure to the backbone of the polyol-containing composition through reaction with polyisocyanate.

4651: polycarbonate diol obtained by the copolymerization of 1,4-butanediol, 1,6-hexanediol, and a carbonate compound; molecular weight: 1000

5001: polycarbonate diol obtained by the copolymerization of 1,5-heptanediol and a carbonate compound; molecular weight: 1000

T5650E: manufactured by Asahi Kasei Corp.; polycarbonate diol obtained by the copolymerization of 1,5-heptanediol, 1,6-hexanediol, and a carbonate compound; molecular weight: 500

T5651: manufactured by Asahi Kasei Corp.; polycarbonate diol obtained by the copolymerization of 1,5-heptanediol, 1,6-hexanediol, and a carbonate compound; molecular weight: 1000

T5652: manufactured by Asahi Kasei Corp.; polycarbonate diol obtained by the copolymerization of 1,5-heptanediol, 1,6-hexanediol, and a carbonate compound; molecular weight: 2000

T6001: manufactured by Asahi Kasei Corp.; polycarbonate diol obtained by the copolymerization of 1,6-hexanediol and a carbonate compound; molecular weight: 1000

2,2,3,3,4,4,5,5-1,6-Hexanediol (OFHD)

Ymer N120

OH

O O n

OH

Ymer N120

[Table 3]

| | | Starting material | | | Composition | | | | | | | | | | |
|---|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | $R^2$ | Y | Number-average molecular weight |
| Example 1-1 | POL1-1 | PI1-1 | PEG-1000 | 002 | Side chain | PEG<br>1.35 | -<br>- | Allophanate | $C_6H_{12}$ | Single bond | Urethane | $C_2H_4$ | Ether | 1,800 |
| Example 1-2 | POL1-2 | PI1-2 | PEG-1000 | 0.4 | Side chain | Sulfonic acid group<br>3.43 | -<br>- | Biuret | $C_6H_{12}$ | Single bond | Urethane | $C_2H_4$ | Ether | 4,800 |
| Example 1-3 | POL1-3 | PI1-3 | PEG-1000 | 0.3 | Side chain | Carboxy group<br>1.10 | -<br>- | Biuret | $C_6H_{12}$ | Urethane | Urethane | $C_2H_4$ | Ether | 1,300 |
| Example 1-4 | POL1-4 | PI1-3 | NH2-PEG-OH | 0.3 | Side chain | Carboxy group<br>1.09 | -<br>- | Biuret | $C_6H_{12}$ | Urethane | Urea | $C_2H_4$ | Ether | 1,300 |
| Example 1-5 | POL1-5 | PI1-3 | SH-PEG-OH | 0.3 | Side chain | Carboxy group<br>1.06 | -<br>- | Biuret | $C_6H_{12}$ | Urethane | Thiourea | $C_2H_4$ | Ether | 1,300 |
| Example 1-6 | POL1-6 | PI1-3 | P-1010 | 0.2 | Side chain | Carboxy group<br>0.75 | -<br>- | Biuret | $C_6H_{12}$ | Urethane | Urethane | $C_4H_8/C_5H_{10}$ | Ester | 1,300 |
| Example 1-7 | POL1-7 | PI1-3 | 4651 | 0.2 | Side chain | Carboxy group<br>0.75 | -<br>- | Biuret | $C_6H_{12}$ | Urethane | Urethane | $C_4H_8/C_6H_{12}$ | Carbonate | 2,500 |
| Example 1-8 | POL1-8 | PI1-4 | T5651 | 0.18 | Side chain | PEG<br>6.55 | <br>- | Isocyanurate | $C_6H_{12}$ | Urethane | Urethane | $C_5H_{10}/C_6H_{12}$ | Carbonate | 2,000 |
| Example 1-9 | POL1-9 | PI1-5 | T6001 | 0.07 | Side chain | PEG<br>3.81 | <br>- | Isocyanurate | $C_6H_{12}$ | Thiourea | Urethane | $C_6H_{12}$ | Carbonate | 1,350 |
| Example 1-10 | POL1-10 | PI1-6 | T5650E | 0.07 | Side chain | PEG<br>2.07 | -<br>- | Isocyanurate | $C_6H_{12}$ | Urea | Urethane | $C_5H_{10}/C_6H_{12}$ | Carbonate | 550 |

(continued)

| | | Starting material | | | Composition | | | | | | | | | |
|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | $R^2$ | Y | Number-average molecular weight |
| Example 1-11 | POL1-11 | PI1-7 | 5001 | 0.2 | Side chain | PEG<br>4.84 | Fluoroalkyl<br>5.6 | Alicyclic | Single bond | Urethane/Urea | Urethane | $C_5H_{10}$ | Carbonate | 1,200 |
| Example 1-12 | POL1-12 | PI1-8 | T5651 | 0.2 | Side chain | PEG<br>5.00 | Azole<br>0.7 | Isocyanurate | $C_6H_{12}$ | Urethane/Urea | Urethane | $C_5H_{10}/C_6H_{12}$ | Carbonate | 1,250 |
| Comparative Example 1-1 | POL1-13 | - | - | - | Backbone | PEG<br>25.00 | -<br>- | - | - | Single bond | Single bond | $C_5H_{10}/C_6H_{12}$ | Carbonate /Ether | 1,000 |
| Comparative Example 1-2 | POL1-14 | - | - | - | Backbone | PEG<br>4.00 | -<br>- | - | - | Single bond | Single bond | $C_5H_{10}/C_6H_{12}$ | Carbonate /Ether | 1,000 |
| Comparative Example 1-3 | POL1-15 | - | - | - | Backbone | PEG<br>5.00 | Fluoroalkyl<br>5.0 | - | - | Single bond | Single bond | $C_5H_{10}/C_6H_{12}$ | Carbonate/Ether | 1,000 |
| Example Comparative Example 1-4 | POL1-16 | PI1-4 | T5652 | 0.4 | Side chain | PEG<br>3.00 | -<br>- | Isocyanurate | $C_6H_{12}$ | Urethane | Urethane | $C_5H_{10}/C_6H_{12}$ | Carbonate | 5,540 |
| Comparative Example 1-5 | POL1-17 | - | - | - | Side chain | PEG<br>83.60 | -<br>- | Alkyl | | Ether | Single bond | $C_5H_{10}/C_6H_{12}$ | Carbonate | 1,000 |

[Table 4]

| | | Starting material | | | Composition | | | | | | | | | |
|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | $R^2$ | Y | Number-average molecular weight |
| Example 1-13 | POL1-18 | PI1-10 | T5651 | 0.2 | Side chain | PEG<br>2.76 | -<br>- | Isocyanurate | $C_6H_{12}$ | Urethane | Urethane | $C_5H_{10}/C_6H_{12}$ | Carbonate | 1,700 |
| Example 1-14 | POL1-19 | PI1-11 | T5651 | 0.2 | Side chain | PEG<br>5.99 | -<br>- | Isocyanurate | $C_6H_{12}$ | Urethane | Urethane | $C_5H_{10}/C_6H_{12}$ | Carbonate | 1,600 |
| Example 1-15 | POL1-20 | PI1-12 | T5651 | 0.18 | Side chain | PEG<br>8.88 | -<br>- | Isocyanurate | $C_6H_{12}$ | Urethane | Urethane | $C_5H_{10}/C_6H_{12}$ | Carbonate | 1,500 |
| Example 1-16 | POL1-21 | PI1-12 | T5652 | 0.18 | Side chain | PEG<br>4.83 | -<br>- | Isocyanurate | $C_6H_{12}$ | Urethane | Urethane | $C_5H_{10}/C_6H_{12}$ | Carbonate | 2,500 |
| Example 1-17 | POL1-22 | PI1-13 | T5651 | 0.18 | Side chain | PEG<br>8.91 | -<br>- | Iminooxadiazin edione | $C_6H_{12}$ | Urethane | Urethane | $C_5H_{10}/C_6H_{12}$ | Carbonate | 1,500 |
| Example 1-18 | POL1-23 | PI1-12 | P-1010 | 0.18 | Side chain | PEG<br>8.88 | -<br>- | Isocyanurate | $C_6H_{12}$ | Urethane | Urethane | $C_4H_8/C_6H_{12}$ | Ester | 1,500 |
| Example 1-19 | POL1-24 | PI1-12 | PTMG2000 | 0.18 | Side chain | PEG<br>4.84 | -<br>- | Isocyanurate | $C_6H_{12}$ | Urethane | Urethane | $C_4H_8$ | Ether | 2,500 |
| Example 1-20 | POL1-25 | PI1-14 | T5651 | 0.25 | Side chain | PEG<br>11.26 | -<br>- | Isocyanurate | $C_9H_{18}$ (Alicyclic) | Urethane | Urethane | $C_5H_{10}/C_6H_{12}$ | Carbonate | 1,800 |

[Application Examples 1-1 to 1-12 and Application Comparative Examples 1-1 to 1-5]

<Method for preparing aqueous polyurethane coating film (polyurethane dispersion (PUD))>

(Starting material used)

Polyol-containing composition obtained in Example and/or Comparative Example (hereinafter, also abbreviated to "Pol")

DMPA (2,2-dimethylolpropionic acid)

Methyl ethyl ketone (MEK)

Dibutyltin dilaurate (DBTDL)

IPDI (isophorone diisocyanate)

Triethylamine (TEA)

Pure water

Ethylenediamine (EDA)

(Amount of starting material added)

Pol, IPDI, DMPA, TEA, and EDA were added so as to attain a molar ratio of Pol/IPDI/DMPA/TEA/EDA = 1.0/3.0/1.0/1.0/0.5.

DBTDL was added so as to attain 100 ppm based on the total amount of Pol, IPDI, and DMPA. DBTDL can be diluted with toluene, if necessary, for addition (e.g., 5% DBTDL-toluene solution).

MEK was added so as to attain a solid content of 65% in a prepolymer process.

Pure water was added so as to attain a final solid content of 30% after a MEK removal step. However, if viscosity is increased in a chain elongation step, the solid content may be appropriately adjusted by the addition of pure water.

(Prepolymer process)

A nitrogen atmosphere was created in a 1 L separable flask equipped with a stirrer, a thermometer, a reflux condenser pipe, a nitrogen blowing pipe, and a dropping funnel, which was then charged with Pol, DMPA, DBTDL, and MEK, and stirred at 200 rpm for 15 minutes while refluxed at 80°C. Subsequently, the flask was charged with IPDI using a syringe, and stirred while refluxed at 80°C until NCO% reached 3.5 $\pm$ 0.3% by mass to obtain a MEK solution of a terminal isocyanate group-containing urethane prepolymer. The NCO% is the mass ratio of an isocyanate group of the polyisocyanate to the total mass of the starting materials used in the prepolymer process, and was determined by the method described in [Isocyanate group concentration (% by mass)].

(Neutralization step and emulsification step)

The obtained urethane prepolymer solution was cooled to 35°C, and TEA was added thereto with stirring at 500 rpm. Subsequently, the solution was kept at 35°C. While the stirring at 500 rpm was continued, pure water was added dropwise thereto at a rate of 10 mL/min to obtain an emulsion.

(Chain elongation step)

The obtained emulsion was kept at 35°C. While the stirring at 500 rpm was continued, EDA was added thereto to perform chain elongation reaction.

(Step of distilling off MEK)

The solution thus subjected to chain elongation reaction was heated under reduced pressure so that methyl ethyl ketone was distilled off to obtain respective aqueous polyurethane solutions of PUD-1 to PUD-17.

[Water dispersion stability evaluation of PUD]

A glass container was hermetically sealed, and a heating test for 4 weeks was conducted in a thermostat of 50°C. The particle sizes of dispersed particles of the PUD solution were measured before and after the test. The volume-average particle size of aqueous polyurethane was measured using "Nanotrack UPA" manufactured by Nikkiso Co., Ltd. Criteria for determination were as described below, and smaller change in particle size was determined to mean more favorable stability.

(Criteria for determination)

A+: The rate of change in particle size was less than 1%.

A : The rate of change in particle size was less than 2%.

B : The rate of change in particle size was 2% or more and less than 5%.

C : The rate of change in particle size was 5% or more.

(PUD coating film preparation step)

A polypropylene plate (JIS K6921) with a formwork affixed thereto was coated with each of the obtained aqueous polyurethane solutions of PUD-1 to PUD-17 such that a dried film thickness was 300 μm. The plate was left standing at 23°C × 50% RH for 1 day, then baked at 80°C for 3 hours, and cured at 23°C × 50% RH for 1 week to obtain aqueous polyurethane coating films of Application Examples 1-1 to 1-12 and Application Comparative Examples 1-1 to 1-5. The obtained aqueous polyurethane coating films were evaluated for their various physical properties by methods mentioned later. The evaluation results are shown in Table 5.

[Application Examples 1-13 to 1-20]

Aqueous polyurethane solutions of PUD-18 to PUD-25 were obtained in the same manner as described in [Application Examples 1-1 to 1-12 and Application Comparative Examples 1-1 to 1-5] except that the polyol-containing composition used was changed to Pol1-18 to Pol1-25. Then, PUD coating films were prepared in the same manner as above using the obtained aqueous polyurethane solutions of PUD-18 to PUD-25 to obtain aqueous polyurethane coating films of Application Examples 1-13 to 1-20. The obtained aqueous polyurethane coating films were evaluated for their various physical properties. The evaluation results are shown in Table 6.

[Table 5]

| | | | Evaluation results | | | | |
|---|---|---|---|---|---|---|---|
| | PUD | Polyol used | Water dispersion stability | Stress retention rate after heat resistance test [%] | Stress retention rate after water resistance test [%] | Surface free energy [mN/m] | Chemical resistance spot test |
| Application Example 1-1 | PUD-1 | POL1-1 | A | 66 | 61 | 34 | 45 sec |
| Application Example 1-2 | PUD-2 | POL1-2 | B | 68 | 60 | 37 | 45 sec |
| Application Example 1-3 | PUD-3 | POL1-3 | A | 69 | 75 | 31 | 45 sec |

(continued)

| | | | Evaluation results | | | | |
|---|---|---|---|---|---|---|---|
| | PUD | Polyol used | Water dispersion stability | Stress retention rate after heat resistance test [%] | Stress retention rate after water resistance test [%] | Surface free energy [mN/m] | Chemical resistance spot test |
| Application Example 1-4 | PUD-4 | POL1-4 | A | 63 | 76 | 35 | 45 sec |
| Application Example 1-5 | PUD-5 | POL1-5 | A | 61 | 71 | 34 | 45 sec |
| Application Example 1-6 | PUD-6 | POL1-6 | A | 86 | 55 | 34 | 50 sec |
| Application Example 1-7 | PUD-7 | POL1-7 | A | 87 | 80 | 33 | 60 sec |
| Application Example 1-8 | PUD-8 | POL1-8 | A | 91 | 83 | 29 | 60 sec |
| Application Example 1-9 | PUD-9 | POL1-9 | A | 90 | 82 | 32 | 60 sec |
| Application Example 1-10 | PUD-10 | POL1-10 | A | 91 | 83 | 30 | 60 sec |
| Application Example 1-11 | PUD-11 | POL1-11 | A | 88 | 81 | 22 | 60 sec |
| Application Example 1-12 | PUD-12 | POL1-12 | A | 92 | 91 | 29 | 100 sec |
| Application Comparative Example 1-1 | PUD-13 | POL1-13 | A | 4 | 7 | 36 | < 10 sec |
| Application Comparative Example 1-2 | PUD-14 | POL1-14 | C | 52 | 62 | 32 | 20 sec |
| Application Comparative Example 1-3 | PUD-15 | POL1-15 | Not dispersible | - | - | - | - |
| Application Comparative Example 1-4 | PUD-16 | POL1-16 | Not dispersible | - | - | - | - |
| Application Comparative Example 1-5 | PUD-17 | POL1-17 | A | 13 | 21 | 34 | 20 sec |

[Table 6]

| | | | Evaluation results | | | | |
|---|---|---|---|---|---|---|---|
| | PUD | Polyol used | Water dispersion stability | Stress retention rate after heat resistance test [%] | Stress retention rate after water resistance test [%] | Surface free energy [mN/m] | Chemical resistance spot test |
| Application Example 1-13 | PUD-18 | POL1-18 | A | 93 | 83 | 29 | 70 sec |
| Application Example 1-14 | PUD-19 | POL1-19 | A | 92 | 82 | 30 | 65 sec |
| Application Example 1-15 | PUD-20 | POL1-20 | A+ | 89 | 82 | 32 | 60 sec |
| Application Example 1-16 | PUD-21 | POL1-21 | A | 90 | 82 | 30 | 60 sec |
| Application Example 1-17 | PUD-22 | POL1-22 | A | 89 | 81 | 30 | 55 sec |
| Application Example 1-18 | PUD-23 | POL1-23 | A | 88 | 60 | 32 | 50 sec |
| Application Example 1-19 | PUD-24 | POL1-24 | A | 87 | 81 | 32 | 60 sec |
| Application Example 1-20 | PUD-25 | POL1-25 | B | 91 | 83 | 29 | 60 sec |

[Example 2-1]

In a 500 ml separable flask, 31.3 g of PI2-1 (NCO: 16.1%) and 300 g of PEG-1000 (manufactured by FUJIFILM Wako Pure Chemical Corp.) were placed, and reacted at 100°C for 1 hour after purging with nitrogen to obtain POL2-1. NCO/OH (molar ratio) was set to 0.02. The disappearance of a peak derived from NCO was confirmed by FT-IR. The content of mPEG in PI1-1 was calculated by the quantification method using GPC described in the section [Method for quantifying functional group in polyol-containing composition] and was consequently 1.30 wt% per 1.35 wt% calculated from the amount of the starting material added.

[Examples 2-2 to 2-9 and Comparative Example 2-4]

POL2-2 to POL2-9 and POL2-13 were synthesized in the same manner as in Example 2-1 except that as shown in Table 7, the polyisocyanate used was changed to PI2-2 to PI2-5; the alcohol used was changed; and NCO/OH (molar ratio) to the alcohol was changed to the value described in Table 7.

[Comparative Examples 2-1 to 2-3]

POL2-10 to POL2-12 were synthesized in the same manner as in Comparative Example 1-1 except that change was made as shown in Table 7.

SILAPLANE FM-4421 (manufactured by JNC Corp.): diol having polydimethylsiloxane in the backbone

SILAPLANE FM-DA-11 (manufactured by JNC Corp.): diol having polydimethylsiloxane in a side chain

Table 7 shows the starting materials used in the synthesis of the modified polyol, NCO/OH (molar ratio), and composition. FG1 and FG2 described in the composition represent a functional group (FG) contained in the modified polyol, and parts by mass thereof. In this context, the parts by mass represent the mass of the structure described in FG. Z, $R^1$, $X^1$, $X^2$, P, $R^2$, and Y correspond to Z, $R^1$, $X^1$, $X^2$, P, $R^2$, and Y, respectively, described in the formula (I) and the formula (II). The masses described in FG1 and FG2 of Table 7 represent the masses of partial structures given below. In each partial structure, * represents a bond.

T4671: manufactured by Asahi Kasei Corp.; polycarbonate diol obtained by the copolymerization of 1,4-butanediol, 1,6-hexanediol, and a carbonate compound; molecular weight: 1000

PEG-2000: manufactured by Sanyo Chemical Industries, Ltd.; polyethylene glycol having a molecular weight of 2000

Fluoroalkyl :

$$*\!\left[CF_2\right]_n\!*$$

Silicone :

$$*\!\left[\,\overset{|}{\underset{|}{Si}}-O\,\right]_n\!*$$

Long-chain alkyl: $*\text{-}C_{16}H_{33}$

Trialkoxysilane: $*\text{-}Si(OEt)_3$

Isopropyl alcohol (IPA): $*\text{-}CH(CH_3)_2$

Neopentyl alcohol: $*\text{-}CH_2C(CH_3)_3$

[Examples 2-10 to 2-14]

POL2-14 to POL2-18 were synthesized in the same manner as in Example 2-1 except that as shown in Table 8, the polyisocyanate and the alcohol were changed; and NCO/OH (molar ratio) to the alcohol was changed to the value described in Table 8. The content of the functional group in each example was also calculated in accordance with the aforementioned section [Method for quantifying functional group in polyol-containing composition].

[Table 7]

| | | Starting material | | | Composition | | | | | | | | | |
|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | R2 | Y | Number-average molecular weight |
| Example 2-1 | POL2-1 | PI2-1 | PEG-1000 | 0.2 | Side chain | Fluoroalkyl<br>3.0% | -<br>- | Biuret | $C_6H_{12}$ | Single bond | Urethane | $C_2H_4$ | Ether | 1200 |
| Example 2-2 | POL2-2 | PI2-2 | PEG-1000 | 0.2 | Side chain | Silicone<br>11.3% | -<br>- | Allophanate | $C_6H_{12}$ | Urethane | Urethane | $C_2H_4$ | Ether | 1400 |
| Example 2-3 | POL2-3 | PI2-2 | NH2-PEG-OH | 0.2 | Side chain | Silicone<br>11.3% | -<br>- | Allophanate | $C_6H_{12}$ | Urethane | Urea | $C_2H_4$ | Ether | 1400 |
| Example 2-4 | POL2-4 | PI2-2 | SH-PEG-OH | 0.2 | Side chain | Silicone<br>11.3% | -<br>- | Allophanate | $C_6H_{12}$ | Urethane | Thiourea | $C_2H_4$ | Ether | 1400 |
| Example 2-5 | POL2-5 | PI2-2 | P-1010 | 0.2 | Side chain | Silicone<br>11.3% | -<br>- | Allophanate | $C_6H_{12}$ | Urethane | Urethane | $C_4H_8/C_6H_{12}$ | Ester | 1400 |
| Example 2-6 | POL2-6 | PI2-2 | T4671 | 0.2 | Side chain | Silicone<br>11.3% | -<br>- | Allophanate | $C_6H_{12}$ | Urethane | Urethane | $C_4H_8/C_6H_{12}$ | Carbonate | 1400 |
| Example 2-7 | POL2-7 | PI2-3 | T5651 | 0.15 | Side chain | Long-chain alkyl<br>2.7% | -<br>- | Biuret | $C_6H_{12}$ | Thiourea | Urethane | $C_5H_{10}/C_6H_{12}$ | Carbonate | 1230 |
| Example 2-8 | POL2-8 | PI2-4 | T6001 | 0.25 | Side chain | Silicone<br>11.4% | Trialkoxysilane<br>0.3% | Isocyanurate | $C_6H_{12}$ | Urethane/Urea | Urethane | $C_6H_{12}$ | Carbonate | 1500 |
| Example 2-9 | POL2-9 | PI2-5 | T5651 | 0.2 | Side chain | Silicone<br>11.3% | -<br>- | Isocyanurate | $C_6H_{12}$ | Urethane | Urethane | $C_5H_{10}/C_6H_{12}$ | Carbonate | 1500 |
| Comparative Example 2-1 | POL2-10 | - | - | - | Backbone | Silicone<br>30.0% | -<br>- | - | - | Urethane | - | $C_6H_{12}$ | Carbonate | 1000 |
| Comparative Example 2-2 | POL2-11 | - | - | - | Backbone | Silicone<br>15.0% | -<br>- | - | - | - | - | $C_5H_{10}/C_6H_{12}$ | Carbonate | 1000 |
| Comparative Example 2-3 | POL2-12 | - | - | - | Backbone | Fluoroalkyl<br>22.9% | -<br>- | - | - | - | - | $C_5H_{10}/C_6H_{12}$ | Carbonate | 714 |

(continued)

| | | Starting material | | | Composition | | | | | | | | | |
|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | R2 | Y | Number-average molecular weight |
| Comparative Example 2-4 | POL2-13 | PI2-1 | PEG-2000 | 0.4 | Side chain | Silicone | - | Biuret | $C_6H_{12}$ | Single bond | Urethane | $C_2H_4$ | Ether | 5200 |
| | | | | | | 5.6% | - | | | | | | | |

[Table 8]

| | | Starting material | | | Composition | | | | | | | | | |
|---|---|---|---|---|---|---|---|---|---|---|---|---|---|---|
| | | | | | | | | | | | | P | | |
| | Modified polyol | Isocyanate | Alcohol | NCO/OH | Backbone/side chain | FG1[wt%] | FG2[wt%] | Z | $R^1$ | X1 | X2 | R2 | Y | Number-average molecular weight |
| Example 2-10 | POL2-14 | PI2-6 | T5651 | 0.2 | Side chain | Trialkoxysilane | - | Isocyanurate | $C_6H_{12}$ | Urethane | Urethane | $C_5H_{10}/C_6H_{12}$ | Carbonate | 1500 |
| | | | | | | 0.4% | - | | | | | | | |
| Example 2-11 | POL2-15 | PI2-7 | T5651 | 0.2 | Side chain | Azole | - | Isocyanurate | $C_6H_{12}$ | Urethane | Urethane | $C_5H_{10}/C_6H_{12}$ | Carbonate | 1500 |
| | | | | | | 1.5% | - | | | | | | | |
| Example 2-12 | POL2-16 | PI2-8 | PPG | 0.86 | Side chain | Long-chain alkyl (IPA) | - | Allophanate | $C_6H_{12}$ | Urethane | Urethane | $C_3H_6$ | Ether | 4100 |
| | | | | | | 4.1% | - | | | | | | | |
| Example 2-13 | POL2-17 | PI2-8 | T6001 | 0.72 | Side chain | Long-chain alkyl(IPA) | - | Allophanate | $C_6H_{12}$ | Urethane | Urethane | $C_6H_{12}$ | Carbonate | 3600 |
| | | | | | | 3.6% | - | | | | | | | |
| Example 2-14 | POL2-18 | PI2-9 | P-1010 | 0.74 | Side chain | Long-chain alkyl (neopentyl alcohol) | - | Allophanate | $C_6H_{12}$ | Urethane | Urethane | $C_4H_8/C_6H_{12}$ | Ester | 3700 |
| | | | | | | 5.8% | - | | | | | | | |

[Application Examples 2-1 to 2-9 and Application Comparative Examples 2-1 to 2-4]

<Method for preparing thermoplastic polyurethane (TPU) composition and polyurethane coating film (TPU)>

(Starting material used)

Polyol-containing composition obtained in Example and/or Comparative Example (hereinafter, also abbreviated to "Pol")

Diphenylmethane diisocyanate (MDI)

Dimethylformamide (DMF)

Dibutyltin dilaurate (DBTDL)

1,4-Butanediol (BDL)

(Amount of starting material added)

Pol, MDI, and BDL were added so as to attain a molar ratio of Pol/MDI/BDL = 1.0/3.0/2.0.

DBTDL was added so as to attain 100 ppm based on the total amount of Pol, IPDI, and DMPA. DBTDL can be diluted with toluene, if necessary, for addition (e.g., 5% DBTDL-toluene solution).

DMF was added so as to attain a final solid content of 20%.

Pol, DMF, and DBTDL were added and mixed until homogeneous to obtain solution 1. DMF was used at 80% of the entire amount of usage. Subsequently, a nitrogen atmosphere was created in a 1 L separable flask equipped with a stirrer, a thermometer, a reflux condenser pipe, a nitrogen blowing pipe, and a dropping funnel, to which MDI and DMF were then added and mixed until homogeneous at 40°C. DMF was used at the remaining 20%. The solution 1 prepared in advance was gradually added dropwise thereto with stirring over 30 minutes. After the completion of dropwise addition, reaction was continued until NCO% reached 90% or more calculated from the molar ratio of addition. NCO% was determined by the method described in [Isocyanate group concentration (% by mass)]. Subsequently, BDL was added thereto, and the temperature was elevated to 80°C. A molecular weight was monitored by GPC, and the number-average molecular weight was confirmed to become 50,000 or higher. Then, the reaction was terminated by the addition of 3 ml of ethanol to obtain respective thermoplastic polyurethane (TPU) compositions of TPU-1 to TPU-13.

(TPU coating film preparation step)

Each of the obtained thermoplastic polyurethane compositions of TPU-1 to TPU-13 was applied onto a polycarbonate plate ("Takiron PC-1600" (trade name), 2 mm × 70 mm × 150 mm) such that a dried film thickness was 40 μm. The coating material composition applied onto the polycarbonate plate was baked at 60°C and thereby dried until a finger mark was no longer left on the surface to obtain polyurethane coating films of Application Examples 2-1 to 2-9 and Application Comparative Examples 2-1 to 2-4. The obtained polyurethane coating films were evaluated for their various physical properties by methods mentioned later. The evaluation results are shown in Table 9.

[Application Examples 2-10 to 2-14]

Thermoplastic polyurethane compositions of TPU-14 to TPU-18 were obtained in the same manner as described in [Application Examples 2-1 to 2-9 and Application Comparative Examples 2-1 to 2-4] except that the polyol-containing composition used was changed to Pol2-14 to Pol2-18. Then, TPU coating films were prepared in the same manner as above using the obtained thermoplastic polyurethane compositions of TPU-14 to TPU-18 to obtain polyurethane coating films of Application Examples 2-10 to 2-14. The obtained polyurethane coating films were evaluated for their various physical properties by methods mentioned later. The evaluation results are shown in Tables 10 to 12.

[Table 9]

| | | | Evaluation results | | | |
|---|---|---|---|---|---|---|
| | Polyurethane | Polyol used | Surface free energy [mN/m] | Coating film appearance | Stress retention rate after heat resistance test [%] | Aluminum adhesion |
| Application Example 2-1 | TPU-1 | POL2-1 | 21 | A | 68 | B |
| Application Example 2-2 | TPU-2 | POL2-2 | 20 | A | 74 | B |
| Application Example 2-3 | TPU-3 | POL2-3 | 20 | A | 71 | B |
| Application Example 2-4 | TPU-4 | POL2-4 | 20 | A | 70 | B |
| Application Example 2-5 | TPU-5 | POL2-5 | 18 | A | 68 | B |
| Application Example 2-6 | TPU-6 | POL2-6 | 18 | A | 81 | B |
| Application Example 2-7 | TPU-7 | POL2-7 | 16 | A | 80 | B |
| Application Example 2-8 | TPU-8 | POL2-8 | 15 | A | 92 | A |
| Application Example 2-9 | TPU-9 | POL2-9 | 17 | A | 95 | A |
| Application Comparative Example 2-1 | TPU-10 | POL2-10 | 23 | C | 12 | C |
| Application Comparative Example 2-2 | TPU-11 | POL2-11 | 33 | A | 26 | C |
| Application Comparative Example 2-3 | TPU-12 | POL2-12 | 29 | C | 17 | C |
| Application Comparative Example 2-4 | TPU-13 | POL2-13 | 23 | B | 38 | C |

[Table 10]

| | | | Evaluation results |
|---|---|---|---|
| | Polyurethane | Polyol used | Aluminum adhesion |
| Application Example 2-10 | TPU-14 | POL2-14 | A |

[Table 11]

| | | | Evaluation results |
|---|---|---|---|
| | Polyurethane | Polyol used | Stress retention rate after heat resistance test [%] |
| Application Example 2-11 | TPU-15 | POL2-15 | 89 |

[Table 12]

| | | | Evaluation results | |
|---|---|---|---|---|
| | Polyurethane | Polyol used | Surface free energy [mN/m] | Coating film appearance |
| Application Example 2-12 | TPU-16 | POL2-16 | 25 | A |
| Application Example 2-13 | TPU-17 | POL2-17 | 25 | A |
| Application Example 2-14 | TPU-18 | POL2-18 | 24 | A |

[Tensile test]

A 1 cm × 10 cm strip sample was prepared from each polyurethane coating film or aqueous polyurethane coating film and subjected to a tensile test using a tensile tester (manufactured by Orientec Co., Ltd., product name "TENSILON, model RTE-1210") under conditions involving an inter-chuck distance of 20 mm, a pulling speed of 100 mm/min, and a temperature of 23°C (relative humidity: 55%) to measure breaking stress.

[Heat resistance test]

Breaking stress in the tensile test was measured as to each coating film obtained by the method described above and a coating film subjected to an additional heating test for 1 week in an oven of 120°C, and a stress retention rate between before and after the heat resistance test was measured according to the expression given below. A sample having a stress retention rate of 50% or more was regarded as passing the test. The breaking stress was measured by the method described in the tensile test mentioned above.

[(Breaking stress after the heat resistance test)/(Breaking stress before the heat resistance test)] × 100

[Stress retention rate after water resistance test]

Breaking stress in the tensile test was measured as to each coating film obtained by the method described above and a coating film subjected to an additional water resistance test for 1 week in a thermostat of 60°C after dipping of the coating film in water, which was then simply wiped off with Kimtowel, and a stress retention rate between before and after the heat resistance test was measured according to the expression given below. A sample having a stress retention rate of 50% or more was regarded as passing the test. The breaking stress was measured by the method described in the tensile test mentioned above.

[(Breaking stress after the water resistance test)/(Breaking stress before the water resistance test)] × 100

[Surface free energy]

The surface free energy of each polyurethane coating film was calculated by a surface free energy evaluation method in accordance with the Owens-Wendt method. Specifically, water or diiodomethane was added dropwise as a known liquid onto the polyurethane coating film, and contact angle $\theta$ was measured to calculate surface free energy $\gamma$ of the polyurethane coating film. $\gamma_L{}^d$ = 21.8 (mN/m) and $\gamma_L{}^h$ = 51.0 (mN/m) were used for water, and $\gamma_L{}^d$ = 50.8 (mN/m) and $\gamma_L{}^h$ = 0 (mN/m) were used for diiodomethane, as a known value. A film having lower surface free energy has a better water-repellent system. A sample having surface free energy of 25 mN/m or lower was regarded as passing the test.

[Chemical resistance spot test]

To examine chemical resistance, a solvent resistance test was conducted using ethanol (EtOH) and xylene. Each aqueous polyurethane film was cut out and affixed onto a glass plate (JIS R3202, 2 mm × 100 mm × 150 mm). On a horizontal table, a cotton ball impregnated with the solvent (ethanol or xylene) was left standing on the coating film surface at 23°C in a 50% RH atmosphere, and the time to cause abnormality such as scratch or whitening was visually evaluated. However, a time of less than 10 seconds was regarded as "< 10 sec" for the reproducibility of evaluation.

[Coating film appearance]

The appearance of each obtained TPU coating film was visually confirmed. The method for determining the

coating film appearance was as follows.

(Determination method)

A: Smooth without cracks or projections

B: Slightly having projections, albeit without cracks

C: Having cracks

[Metal adhesion]

A coating film was prepared on an aluminum plate (JIS H4000, A1050p; 1.0 × 70 × 150 mm) in the same manner as above and evaluated for adhesion. For the evaluation of adhesion, incisions were made on the coating film using a cutter knife in accordance with the cross-cut method of JIS K5600-5-6: 1999 such that the number of squares of 1 mm × 1 mm in size was 100. Then, cellophane tape was affixed to the incised surface of the coating film and then peeled off, and the number of remaining squares was measured. The adhesion was evaluated on the basis of the following evaluation criteria from the measured number of squares.

(Evaluation criteria)

A: The number of squares was 90 or more.

B: The number of squares was 80 or more and less than 90.

C: The number of squares was less than 80 and not evaluable.

**Industrial Applicability**

According to the present invention, polyurethane or aqueous polyurethane that is not only excellent in durability but has various functionalities enhanced with the introduction of a functional group can be formed, various functionalities can be exerted by a relatively small amount of introduction, and the degree of freedom in design can be enhanced. Therefore, the present invention is widely and effectively applicable to the field of materials for polyurethane or aqueous polyurethane.

**Claims**

**1.** A polyol-containing composition comprising at least one hydroxy compound, wherein

the polyol-containing composition has a number-average molecular weight of 300 to 5,000, and
the at least one hydroxy compound has: at least one main backbone structure selected from the group consisting of an isocyanurate backbone, an iminooxadiazinedione backbone, a biuret backbone, an allophanate backbone, an aromatic backbone, and an alicyclic backbone; at least one sub-backbone structure selected from the group consisting of a carbonate bond, an ether bond, and an ester bond, and connected directly or via a linking group to the main backbone structure;

at least two or more terminal hydroxy groups connected directly or via a linking group to the sub-backbone structure; and at least one functional group other than a hydroxy group connected directly or via a linking group to the main backbone structure.

**2.** The polyol-containing composition according to claim 1, wherein
a content ratio of the functional group is 0.1 to 60.0 parts by mass per 100 parts by mass in total of the polyol-containing composition.

**3.** The polyol-containing composition according to claim 1, wherein a content ratio of the functional group is 0.1 to 20.0 parts by mass per 100 parts by mass in total of the polyol-containing composition.

**4.** The polyol-containing composition according to claim 1, wherein the functional group is at least one group selected from the group consisting of a hydrophilic group, a hydrophobic group, an adsorbable group, and a cross-linkable group.

**5.** The polyol-containing composition according to claim 1, wherein the functional group is a hydrophilic group.

**6.** The polyol-containing composition according to claim 1, wherein the functional group is a hydrophobic group.

**7.** The polyol-containing composition according to claim 1, wherein the functional group is an adsorbable group.

**8.** The polyol-containing composition according to claim 1, wherein the functional group is a cross-linkable group.

**9.** The polyol-containing composition according to claim 1, wherein the functional group is at least two or more groups selected from the group consisting of a hydrophilic group, a hydrophobic group, an adsorbable group, and a cross-linkable group.

**10.** The polyol-containing composition according to claim 1, wherein the at least one hydroxy compound has a structure represented by the following formula (I):

Formula (I)

$$\begin{array}{l}(R^1\text{-}X^1\text{-}FG)m \\ | \\ Z\text{-}(R^1\text{-}X^2\text{-}P\text{-}OH)n\end{array}$$

wherein m is an integer of 1 or larger, n is an integer of 2 or larger, Z is at least one member selected from the group consisting of an isocyanurate backbone, an iminooxadiazinedione backbone, a biuret backbone, an allophanate backbone, an aromatic backbone, and an alicyclic backbone, $R^1$ is a linear or branched divalent hydrocarbon group, an alicyclic structure, or a single bond, a plurality of $R^1$ are optionally different from each other, the divalent hydrocarbon group and the alicyclic structure optionally have a heteroatom, $X^1$ is a single bond or a divalent linking group, a plurality of $X^1$ are optionally different from each other, FG is the functional group, $X^2$ is a single bond or a divalent linking group, a plurality of $X^2$ are optionally different from each other, P is represented by the following formula (II), and a plurality of P are optionally different from each other:

Formula (II)

$$* \left[ R^2 - Y \right]_n R^2 - *$$

wherein n is an integer of 1 or larger, * is a bond, $R^2$ is a divalent linear or branched hydrocarbon group, a plurality of $R^2$ are optionally different from each other, $R^2$ optionally has a heteroatom, and Y is at least one member selected from the group consisting of a carbonate bond, an ether bond, and an ester bond.

**11.** The polyol-containing composition according to claim 10, wherein

each of the $X^1$ and the $X^2$ in the formula (I) comprises at least one or more of urethane, urea, and thiourea.

**12.** The polyol-containing composition according to claim 10, wherein the Y in the formula (II) is a carbonate bond.

**13.** Polyurethane obtainable using the polyol-containing composition according to any one of claims 1 to 12.

**14.** Aqueous polyurethane obtainable using the polyol-containing composition according to any one of claims 1 to 12.

**15.** Polyurethane comprising an addition polymer of the polyol-containing composition according to any one of claims 1 to 12 and polyfunctional isocyanate.

**16.** Aqueous polyurethane comprising an addition polymer of the polyol-containing composition according to any one of claims 1 to 12 and polyfunctional isocyanate.

## INTERNATIONAL SEARCH REPORT

International application No.
**PCT/JP2023/045270**

**A. CLASSIFICATION OF SUBJECT MATTER**

***C08G 18/10***(2006.01)i; ***C08G 18/00***(2006.01)i
FI: C08G18/10; C08G18/00 C

According to International Patent Classification (IPC) or to both national classification and IPC

**B. FIELDS SEARCHED**

Minimum documentation searched (classification system followed by classification symbols)

C08G18/10; C08G18/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-196418 A (DIC CORP.) 16 October 2014 (2014-10-16) | 1-16 |
| A | JP 2021-88631 A (TOYO INK SC HOLDINGS CO., LTD.) 10 June 2021 (2021-06-10) | 1-16 |
| A | JP 2019-81826 A (SEIKO EPSON CORPORATION) 30 May 2019 (2019-05-30) | 1-16 |
| A | JP 2006-22133 A (NIPPON POLYURETHANE IND CO., LTD.) 26 January 2006 (2006-01-26) | 1-16 |
| A | JP 2014-218568 A (ASAHI KASEI CHEMICALS CORPORATION) 20 November 2014 (2014-11-20) | 1-16 |
| A | WO 2022/246037 A1 (SUN CHEMICAL CORP.) 24 November 2022 (2022-11-24) | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045270**

| Patent document cited in search report | Publication date (day/month/year) | Patent family member(s) | Publication date (day/month/year) |
|---|---|---|---|
| JP 2014-196418 A | 16 October 2014 | (Family: none) | |
| JP 2021-88631 A | 10 June 2021 | JP 6795079 B1 | |
| | | WO 2021/111956 A1 | |
| | | TW 202124489 A | |
| | | CN 114729255 A | |
| JP 2019-81826 A | 30 May 2019 | (Family: none) | |
| JP 2006-22133 A | 26 January 2006 | CN 1718606 A | |
| JP 2014-218568 A | 20 November 2014 | (Family: none) | |
| WO 2022/246037 A1 | 24 November 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5316427 B
- JP 6235329 B
- JP 2018012769 A
- JP 2006328372 A
- JP 3299803 B
- WO 2003027163 A
- JP 6647130 B
- JP 6276848 B


### Non-patent literature cited in the description


- *Tetrahedron*, 2007, vol. 63 (31), 7285-7301